# EUROPEAN PATENT SPECIFICATION

(11) **EP 4 045 292 B1**
(45) Date of publication and mention of the grant of the patent: **03.12.2025**
(21) Application number: 20793176.7
(22) Date of filing: 14.10.2020
(51) Int. Cl.: B29C 64/153, B29C 64/307, B33Y 10/00, B33Y 30/00, B33Y 40/00, B29C 64/124, B29C 64/165, B33Y 70/00

(54) **PATTERNING DEVICE FOR THE PREPARATION OF THREE-DIMENSIONAL STRUCTURES AND METHOD FOR THE PRODUCTION THEREOF**
STRUKTURIERUNGSVORRICHTUNG ZUR HERSTELLUNG VON DREIDIMENSIONALEN STRUKTUREN UND VERFAHREN ZUR HERSTELLUNG DAVON
DISPOSITIF DE FORMATION DE MOTIFS POUR LA PRÉPARATION DE STRUCTURES TRIDIMENSIONNELLES ET SON PROCÉDÉ DE FABRICATION

(30) Priority: 15.10.2019 EP 19203370
(43) Date of publication of application: 24.08.2022
(73) Proprietor: AO Technology AG, 7000 Chur (CH)
(72) Inventor: SERRA, Tiziano, 7270 Davos Platz (CH); THURNER, Marc, 2075 Wavre (CH)
(74) Representative: P&TS SA (AG, Ltd.)
(86) International application number: PCT/IB2020/059621
(87) International publication number: WO 2021/074796

(56) References cited:
- JP-A- 2000 336 403
- JP-A- 2000 336 403
- US-A1- 2016 145 566
- US-A1- 2017 282 462
- US-A1- 2017 282 462
- LEE JIA MIN ET AL: "Resolution and shape in bioprinting: Strategizing towards complex tissue and organ printing", APPLIED PHYSICS REVIEWS, AMERICAN INSTITUTE OF PHYSICS, 2 HUNTINGTON QUADRANGLE, MELVILLE, NY 11747, vol. 6, no. 1, 11 March 2019 (2019-03-11), XP012236096, [retrieved on 20190311], DOI: 10.1063/1.5053909
- SHAHID M NASEER ET AL: "Surface acoustic waves induced micropatterning of cells in gelatin methacryloyl (GelMA) hydrogels", BIOFABRICATION, vol. 9, no. 1, 1 March 2017 (2017-03-01), UK, pages 015020, XP055514878, ISSN: 1758-5082, DOI: 10.1088/1758-5090/aa585e
- LEE JIA MIN ET AL: "Resolution and shape in bioprinting: Strategizing towards complex tissue and organ printing", APPLIED PHYSICS REVIEWS, AMERICAN INSTITUTE OF PHYSICS, 2 HUNTINGTON QUADRANGLE, MELVILLE, NY 11747, vol. 6, no. 1, 11 March 2019 (2019-03-11), XP012236096, DOI: 10.1063/1.5053909
- SHAHID M NASEER ET AL: "Surface acoustic waves induced micropatterning of cells in gelatin methacryloyl (GelMA) hydrogels", BIOFABRICATION, vol. 9, no. 1, 1 March 2017 (2017-03-01), UK, pages 015020, XP055514878, ISSN: 1758-5082, DOI: 10.1088/1758-5090/aa585e

## Description

### Field of the invention

The present invention concerns an integrated device for the preparation of three-dimensional structures, and in particular three-dimensional structures of biological material, such as artificial biological tissues. The preparation of such three-dimensional structures is based on Faraday waves (FW), which can be combined with additive manufacturing techniques. In particular, the present patterning device allows an easy and convenient production of functional biological tissues by triggering self-assembly processes. Such an integrated device thus comprises one or more pattern generators and can, additionally, comprise one or more additive manufacturing elements.

### Description of related art

Processes based on Faraday waves (FW) are already known for generating artificial biological tissue (US 2016/145566 A). A method using such approach is for example described in the patent application WO2019038453. In this case, specific patterns are generated in a layer of particles spread in a hydrogel matrix, using sound vibrations. It is necessary to combine several layers to obtain a three-dimensional structure, while properly maintaining the particles in the matrix.

Other limitations of the currently used techniques relate to the reduced diversity of the material which can be used to provide the artificial biological tissues and the complexity of the produced biomaterial.

The devices used for the application of the known processes are not adapted for the production of three-dimensional structures in a highly reproducible manner. In particular, various devices are separately used and handled, which is a source of variation in the samples produced therewith and limitations in terms of number and diversity of three-dimensional structures which can be produced.

The known methods, which are lengthy and costly, are furthermore not adapted for the production of three-dimensional structures at a point of care.

It appears thus necessary to improve the processes currently applied, as well as the devices used for the production of three-dimensional structures.

### Brief summary of the invention

It is an object of the present invention to propose a patterning device allowing the preparation of three-dimensional structures of a material in a fast, straightforward and highly reproducible manner. Such material denotes any particles suspended in a matrix in such a way to be able to migrate in the matrix under sound wave or other vibrational waves constraints, together with the matrix itself, the properties of which can be modified. In particular, the viscosity or the rheological properties, and any other physical and chemical properties of the matrix can be modified from a state where the particles immersed in the matrix are free to migrate under exposure to vibrational waves to a state where the particles are immobilized in the matrix. The particles thus generate a pattern in the matrix, which is adapted for the production of a three-dimensional structure.

In the present disclosure, the term "pattern" denotes a non-homogenous arrangement of the particles under the influence of vibrational waves. In particular the pattern may reflect the shape of the waves within the matrix, defined by the concentration of the particles in the matrix. The pattern thus defines gradient concentrations having local maxima and minima. In other word the "pattern" object of the present disclosure excludes any homogenous spread of the particles. It can relate to a geometrical arrangement, comprising periodical or regular variation of concentration. Alternatively, the pattern can relate to non-geometrical arrangements.

The particles referred to denote any particles which can be suspended in a matrix and are able to migrate under exposure to vibrational waves. More particularly, the particles can be of organic, inorganic or metallic type. Such inorganic particles include tricalcium phosphate, hydroxyapatite, other calcium phosphates, calcium sulphate, magnesium carbonate, calcium carbonate and any inorganic salts or complexes. Organic particles include any organic compound or group of compounds such as organic oligomers or organic polymers, fatty acids, liposomes, and encapsulated organic compounds. Organic particles also includes potential active molecules such as drugs or combination of drugs. Organic particles also refers to biological particles, in the sense of living material, such as cells, cell agglomerates, tissue fragments, organoids, spheroids, bacteria, microsomes, and components of living material such as proteins, microparticles loaded with proteins or signaling molecules, as well as any peptide, polypeptide, nucleic acid oligomers and nutritive elements for biological cells. The biological cells can be of any type, including osteoblasts, fibroblasts, keratinocytes, human mesenchymal stem cells, chondrocytes, or human umbilical vein endothelial cells, or a mixture thereof. It is to be understood that particles can include mixtures of organic component, inorganic components, metallic components and living material.

The matrix denotes any material adapted for suspending particles such as hydrogel, paste, fluid and any other material. The matrix may comprise gelatin or gelatin derivatives such as gelatin methacrylate, hyaluronic acid or hyaluronic acid derivatives such as hyaluronic acid methacrylate, or collagen, fibrin/thrombin, matrigel, atrigel, agarose, hyaluronan tyramine, alginate or a mixture thereof. The matrix further comprises components or mixtures of components adapted for modifying the physical properties of the matrix, at least adapted for increasing the viscosity to prevent the migration of the particles in the matrix once it has been modified.

It is understood that the particles themselves are preferably not subject to polymerization or reticulation under the process of the present disclosure. The particles thus remain non linked and non-combined to each other. The matrix comprising the particles is on the contrary subject to some modification, such as viscosity modification or partial polymerization, so as to better immobilize the particles comprised therein and maintain their nonuniform concentration produced by the sound waves. It is further understood that the matrix remains combined to the particles once the three dimensional pattern is produced. Since the particles remain non linked and non-polymerized, the surrounding matrix is necessary to maintain the pattern resulting from the waves. In case the particles are living material, the surrounding matrix may in addition be used as nutritional environment. The three-dimensional patterning thus denotes the assembly comprising both the matrix and the particles.

It is also understood that the vibrational wave excludes the range of frequencies related to ultrasounds. This is particular true in case the particles refers to living material.

It thus appears clear that the process of the present disclosure differs from a traditional 3D printing, wherein some particles are cured or polymerized and wherein the remaining surrounding material is then eliminated.

It is further understood that in the three dimensional pattern according to the present disclosure, the particles and the matrix provide two distinct compositions, each having different properties at least under heat or UV irradiations. The three-dimensional structures referred to in the present disclosure may thus defined multiphasic structures.

In the present disclosure, a "sample" denotes the assembly of particles in a matrix. Preferably, the matrix has a gel-like consistency wherein the particles are embedded. The properties of the matrix may be transformed so as to prevent migration of the particles.

Above and below, the expression three-dimensional structure denotes the structure resulting from the patterns produced according to the present process or from the combination of several patterns produced according to the present process. A living three-dimensional structure denotes a structure resulting from the combination of the patterns and comprising living material such as living cells.

It is a further object to the present invention to improve the viability of the produced artificial tissue.

It is also an object of the present invention to propose an improved process for the production of three-dimensional structures of biological material.

It is also an object of the present invention to propose a process adapted for the production of three-dimensional structures having more diverse and more complex combinations of starting materials.

It is also an object of the present invention to propose a process for the production of three-dimensional structures at the point of care. The point of care mentioned here denotes any laboratory dedicated to welcome and treat patients, including hospitals, private hospitals, medical laboratories, analytical laboratories. The point of care further denotes any research institutes, pharmaceutical companies, universities, public or private training organisations.

According to the invention, these aims are achieved by means of the device and the process described in the present claims.

### Brief Description of the Drawings

The invention will be better understood with the aid of the description of some embodiments given by way of examples and illustrated by the following figures:
- Fig. 1a, 1b, 1c, 1d : General view of the device according to various embodiments ;
- Fig. 2a, 2b, 2c : Schematic arrangement of the orientation control device ;
- Fig. 3a, 3b : Examples of holders ;
- Fig. 4a, 4b, 4c : Example of lateral damping device according to some embodiments ;
- Fig. 5a, 5b, 5c, 5d : Examples of lateral damping device according to other embodiments ;
- Fig. 6a, 6b, 6c, 6d, 6e, 6f, 6g, 6h, 6i, 6j : Examples of light emitting systems according to the invention ;
- Fig. 7a, 7b, 7c, 7d, 7e, 7f, 7g, 7h : Examples of container fixation means according to the invention ;
- Fig 8a, 8b, 8c, 8d : Example of containers according to some embodiments ;
- Fig. 9a, 9b : Examples of container according to other embodiments ;
- Fig. 10a, 10b : Examples of holder arrangements according to embodiments ;
- Fig. 11 : Schematic representation of the functional elements of the printing device
- Fig. 12a, 12b : Examples of processes according to the present invention ;
- Fig. 13 : Example of a process including the 3D printing of accessories
- Fig. 14 : Example of a sequential process wherein the each layer is built on top of the preceding layer ;
- Fig. 15 : Example of a parallel process wherein each layer is built independently from each other;
- Fig. 16 : Example of pattern obtained according to the present process
- Fig. 17a, 17b, 17c : Example of a container comprising internal functional elements and resulting pattern.

### Detailed Description of possible embodiments of the Invention

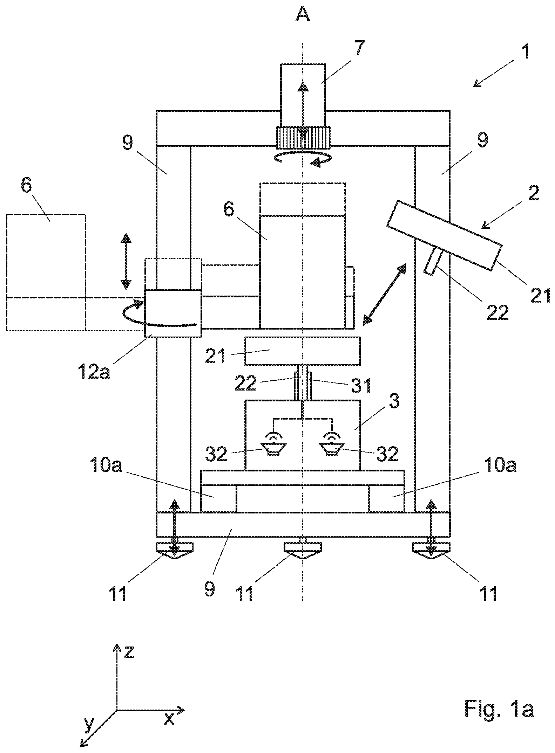

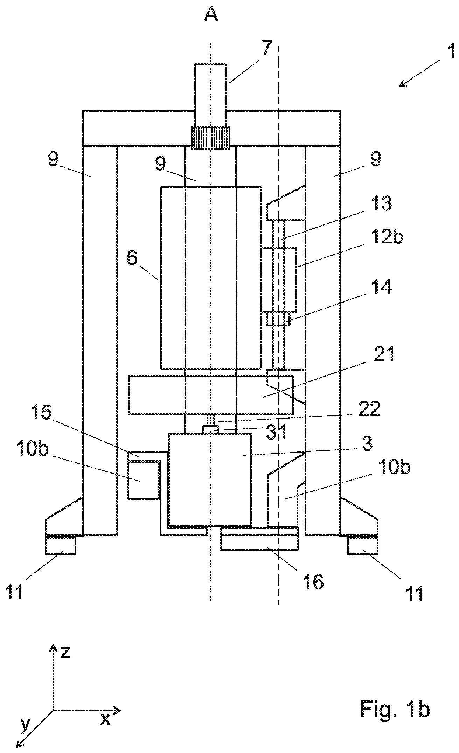

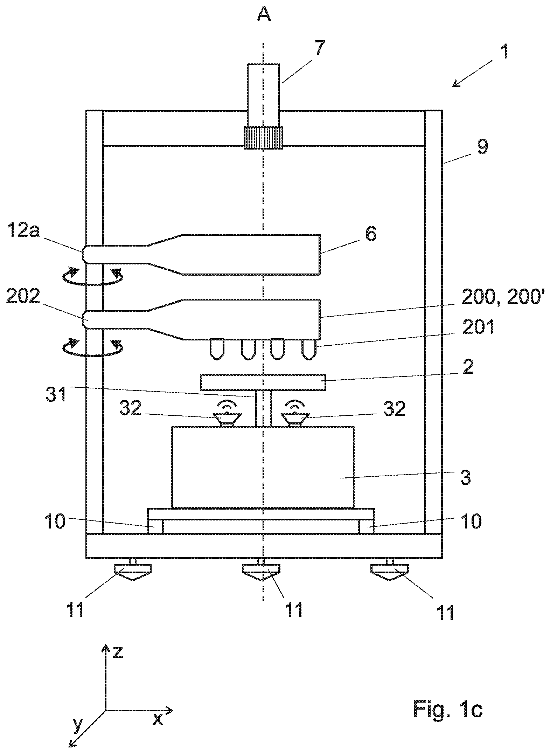

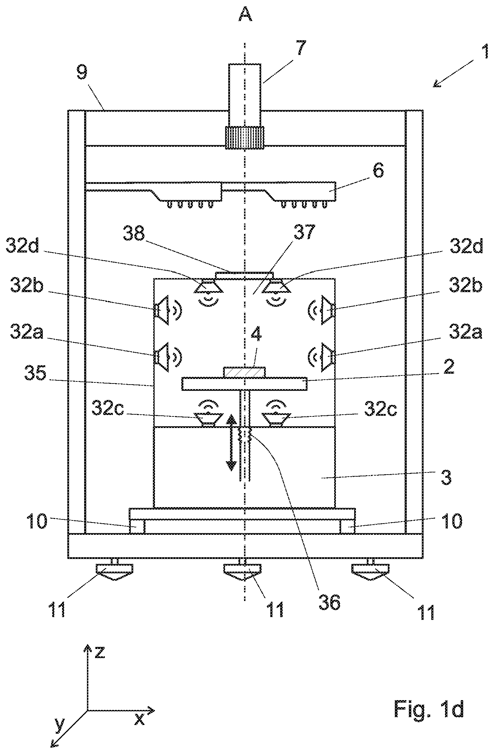

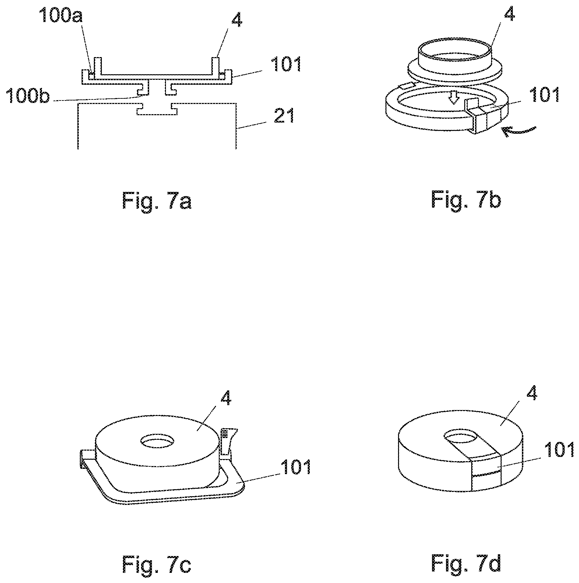

Figures 1a, 1b, 1c, 1d show a general arrangement of the patterning device 1 according to various embodiments of the present invention. The patterning device **1** comprises a pattern generator **3** and a holder **2** connected to the pattern generator **3.** The holder **2** is adapted to hold a sample container **46** comprising the particles **P** to be arranged in a three-dimensional structure. The sample container **46** is placed on the holder **2** by the mean of a container fixation means **4.** The mixture comprising the particles **P** and the matrix **M** is below referred to as the sample **S.** The holder **2** is connected to the pattern generator **3** in such a way to transmit the vibrational waves **W** generated by the pattern generator **3** to the container fixation means **4,** comprising a sample container **46** and to the particles **P** it contains. To this end, the holder **2** comprises a holder plate **21** on which can be arranged the container fixation means **4,** or to which are integrated the container fixation means **4,** and a holder connection means **22** allowing its mechanical connection to the pattern generator **3.** The pattern generator **3** has a generator connection means **31** adapted to cooperate with the holder connection means **22** and to maintain the holder **2** in position. The holder plate **21** of the holder **2** comprises a container positioning means **100** (figures 7a-7h) adapted to maintain the container fixation means **4** firmly positioned on the holder plate **21.**

The pattern generator **3** is here understood as equivalent to a sound wave generator in the sense that is allows to produce compression waves similar to the sound waves. It is however not limited to a mere speaker. The waves produced by the pattern generator **3** may be audible or not by a human user. The quality of the waves emitted by the pattern generator **3** should be very high to produce a clear pattern within the sample, which may be difficult or impossible with a speaker.

The container **46** may remain open or be closed with a lid.

The particles **P** are comprised in a matrix **M,** the properties of which can be modified during the process of producing the three-dimensional structures. The matrix **M** may contain to this end components which can react under light, and in particular under UV light, or under heat, or under other physical or chemical conditions. The patterning device **1** comprises at least one transformation device **D** adapted for the transformation of the matrix **M.** Such transformation device **D** includes lights such as UV, UV-visible, or infrared lights, heat plate, oven, microwave generator, and any device adapted to induce a transformation in the matrix **M.** In particular, the patterning device **1** comprises a light emission system **6** adapted to initiate the transformation of the matrix **M** under light irradiation. Alternatively or in addition, the matrix **M** may comprise chemical components which can react under heat. Such reactions include chemical or temperature-induced polymerisation or crosslinking. The patterning device **1** may comprise to this end a heat source such as infrared lights. The infrared lights may be included in the light emission system **6** or be part of a distinct device.

The patterning device **1** comprises a picture recorder **7** focused on the sample **S.** The picture recorder **7** is adapted to monitor the pattern of particles **P** in the sample container **46** when it is under sound wave exposure, or before, or after. It thus allows a real time monitoring of the patterning process. Alternatively or in addition, the picture recorder **7** can record the shape of the pattern, including resulting from the wave exposure of the sample **S.** The picture recorder **7** may be a video system, such as a camera, an infrared camera, an ultrafast camera, or any related device, which is focused on the sample **S** under production. The picture recorder **7** may be coupled to a picture analyser **8,** adapted to recognize patterns, including predetermined patterns, of the particles **P** in the sample container **46.**

The patterning device **1** preferably comprises a frame **9,** wherein the light emission system **6** and the picture recorder **7** are arranged. In particular, at least one of the light emission system **6** and the picture recorder **7,** preferably both of them, are adjustable on the frame **9.** The light emission system **6** is advantageously connected to the frame **9** in a way to take at least two positions, one first position being above the holder **2** and the sample container **46,** the second position being remote from this first position. To this end, the light emitting system **6** is orientable on the **xy** plane. It is for example connected to the frame **9** by means of a rotatable connector **12a** (figure 1a) or **12b** (figure 1b). The rotatable connector **12a, 12b** may be connected directly to the frame **9** or to a guide **13** (figure 1b). Alternatively or in addition, the light emitting system **6** is adjustable along the vertical axis **z** in a way to adjust the distance between the container fixation means **4,** including the sample container **46,** and the emitting lights **61** of the light emitting system **6.** To this end, the rotatable connector **12a, 12b** is allowed to slide either along a vertical beam of the frame **9,** or along the guide **13.** The position of the light emitting system **6** may be adjusted either manually or by means of a motor (not represented). A locker **14** may be used to lock the light emitting system **6** at a given position, including either a given height above the holder **2,** or an angular position, or both height and angular position.

The pattern generator **3** may also be arranged on the frame **9,** by means of one or more damping devices **10,** which reduces the noise and the vibration of the patterning device **1.** Alternatively, the pattern generator **3** is independent of the frame **9.** According to an embodiment, the pattern generator **3** is placed on a set of silent blocks **10a** on a transversal beam of the frame **9** (figure 1a). According to another possible embodiment, the pattern generator **3** is placed on a support **15** comprising a counterweight **16** allowing to reduce the effect of the vibrations produced by the pattern generator **3.** The support **15** may be connected to the frame **9** by means of a set of silent blocks **10b** (Figure 1b).

The frame **9** may comprise 1, 2, 3 or more vertical pillars. It may in addition comprise at least one top horizontal beam to which is placed the picture recorder **7.** Other arrangements of the frame **9** are possible.

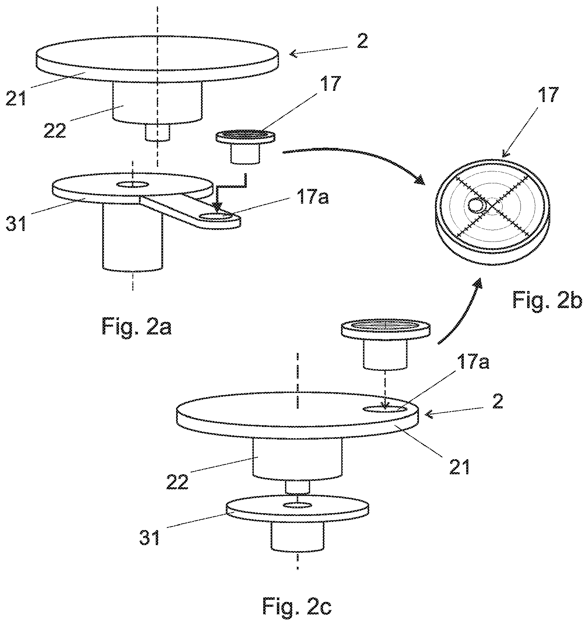

The frame **9** is placed on several feet **11.** At least one of the feet **11** is adjustable, preferably two feet **11** or more can be adjusted. The frame of the patterning device **1** advantageously comprises three feet **11,** two of which are adjustable in order to adjust the level of the patterning device **1,** and in particular the level of the holder **2** at a horizontal orientation. To this end, the patterning device **1** comprises a levelling control means **17** adapted to control the orientation of the plate **21** of the holder **2** with regard to the horizontal plane **xy.** Such orientation may in certain cases preferably be precisely adjustable to avoid any defect in the pattern produced by the pattern generator **3** in the sample **S.** The orientation of the holder **2** is preferably essentially horizontal, meaning that the top surface of the plate **21** of the holder **2,** on which is placed the container fixation means **4,** is in the **xy** plane. The deviation of the orientation of the holder **2** with regard to the **xy** plane should preferably be lower than around 0.5° or less, 0.3° or less, 0.1° or less, even more preferably equal to, or lower than around 0.05°. The levelling control means **17** may be a visual orientation control means such as a spirit level (Figures 2a, 2b, 2c). The spirit level can be removably placed on the holder **2,** or on the pattern generator **3** to which is connected the holder **2,** or at another place on the patterning device **1,** which allows the precise determination of the orientation of the top surface of the plate **21** of the holder **2.** It can be for example placed in a hole **17a** adapted to receive it without deviation. To this end, the edge of the hole **17a** and the edge of the levelling control means **17** may have a complementary conical shape in such a way that the respective position of the patterning device 1 and the levelling control means **17** is always the same. According to such an arrangement the levelling control means **17** can be removed and preserved when the wave generator **3** is activated. Other devices such as an accelerometer or laser detection device may be used alternatively. Alternatively, the levelling control means **17** or the other devices used to determine the orientation of the plate **21,** can be firmly included or incorporated in a part of the patterning device **1** such as the holder **2.** This arrangement avoids the imprecisions which may occur with a removable device, mainly across the time, after several placement and displacement of the levelling control means **17.** The levelling control means **17** can be read directly by the user. Alternatively or in addition, the levelling control means **17** can be recorded and analysed by the picture recorder **7** and the analyser **8** or another suitable device. Alternatively or in addition, the levelling control means **17** may be object of an image projected on a screen or a display visible by the user. Alternatively or in addition, the levelling control means **17** may generate an electronic signal such as an alert or an error signal and/or a signal indicating that the level complies, or does not comply, with the requirements.

According to an embodiment, the patterning device **1** is arranged according to a vertical axis **A,** wherein the pattern generator **3** is at the bottom, wherein the holder **2** is above the pattern generator **3** and wherein the light emitting system **6** is above the holder **2,** or surrounding the holder **2,** and wherein the picture recorder **7** is at a top position, and can be focused on the sample **S** under preparation.

The patterning device **1** is conveniently arranged in a way that the light emitting system **6** can be activated above the sample **S** under preparation, in the sample container **46,** concomitantly to the pattern generator **3** activation. In addition, the picture recorder **7** may be activated concomitantly to the light emitting system **6** and the pattern generator **3.** The light emitting system **6** may remain above the sample **S** under preparation, in the sample container **46,** whether it is activated or inactivated. By this way, the light irradiation of the sample **S** can be switched on and off without removing or replacing the light emitting system **6** above the sample **S.**

The patterning device **1** is easily adaptable to various applications. In particular, the light emitting device **6** may be removed from the patterning device **1** and replaced by a different light emitting system **6.** Alternatively, the light emitting system **6** comprises several different emitting lights or emitting group of lights **61,** which can be independently activated according to the needs. In particular, light or group of lights **61** having different wavelength or different power can be used. The light emitting system **6** may be provided with a light protection screen (not represented), preventing the emitted light from dispersing around the printing device **1.** Alternatively or in addition, safety glasses or face shields are separately provided for the user.

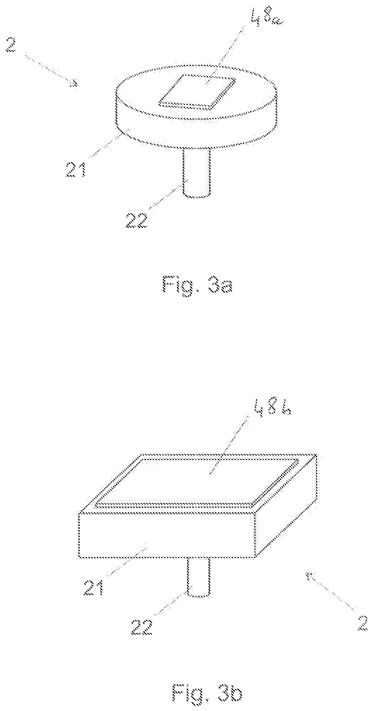

The holder **2** can preferably easily be removed from the pattern generator **3** and replaced by a different holder **2** according to the specific needs. As an example, the holder **2** may be adapted to an individual dish 48a (Figure 3a) or to a wellplate 48b (e.g. plates with single, 6-well, 12-, 24-, 48-, 96-wells or any other number of wells) (Figure 3b) or to both of them. The holder connection means **22** may be in particular manually connected to, and disconnected from, the generator connector **31,** without any tool. A clamping mechanism, comprising a spring can for example be used to maintain the holder **2** in good position. Alternatively, the holder **2** may be placed on a carousel comprising several holders **2** of different types. Such a carousel can be coupled to, and uncoupled from the pattern generator **3** by means of a removable connection means.

In another embodiment, the picture recorder **7** may also be easily removed from the frame **9** and replaced by a different picture recorder **7.** For example, a camera active in the visible field may be replaced by an infrared camera, or by a high speed camera, or by another type of picture recorder **7.** The replacement of the picture recorder **7** is preferably possible without any tool. Manual clamping or locking systems are advantageously used.

Advantageously, the patterning device **1** is provided with a set of various accessories including two or more different emitting lights or groups of lights **61,** two or more different picture recorders **7,** two or more different holders **2.** The patterning device **1** can thus be tuned on demand according to the desired experiment or production needs. In a convenient arrangement, each of the elements such as light emitting system **6,** picture recorder **7** or holder **2,** placed on the patterning device **1** is automatically recognized by a control unit **81.** The corresponding set up can be automatically uploaded to the control unit **81** to properly pilot the corresponding device. Alternatively, the characteristics of the elements may be manually loaded to the control unit **81** by a human-machine-interface (HMI) device **82.**

As a preferred arrangement, the positions of the holder **2** along the horizontal directions **x** and **y,** respectively, are not adjustable. In other words, the position of the holder **2** within the **xy** plane is predetermined. This prevents any lateral movement of the holder **2,** in particular when the pattern generator **3** is activated. Thus, the position of the container fixation means **4** on the top surface of the plate **21** is predetermined, and the lateral position of the holder **2** is also predetermined. The term "predetermined" should be here understood as being not tuneable or adjustable by the user. In case the holder **2** is part of a carousel, the position of the corresponding carousel is predetermined.

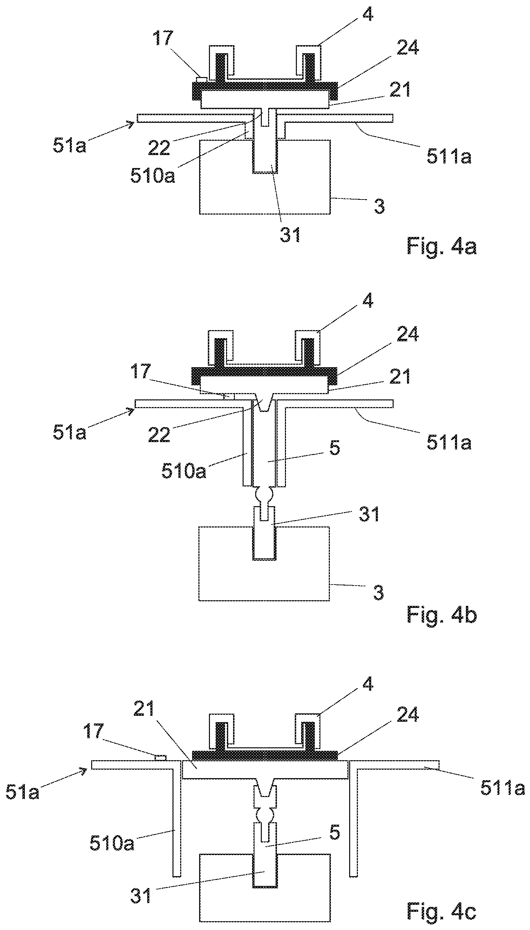

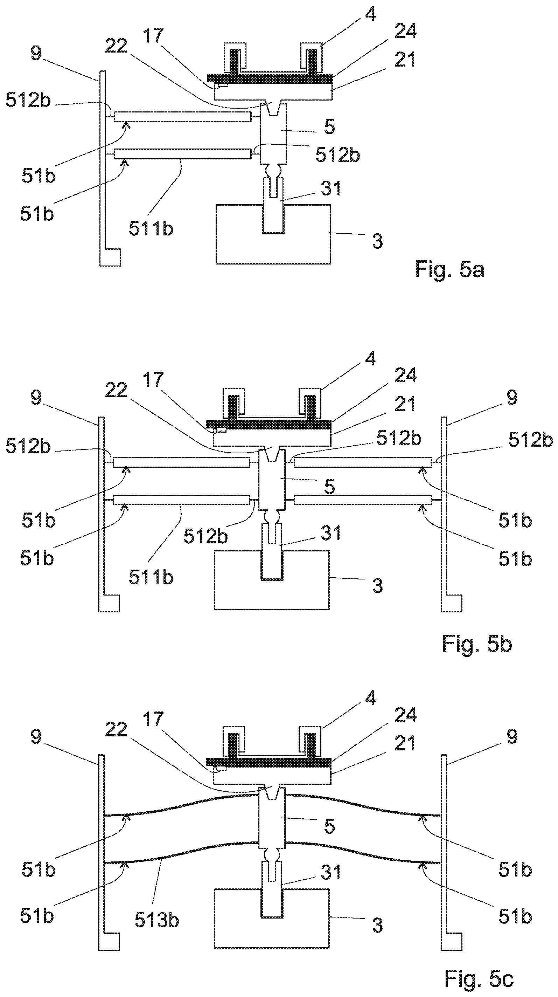

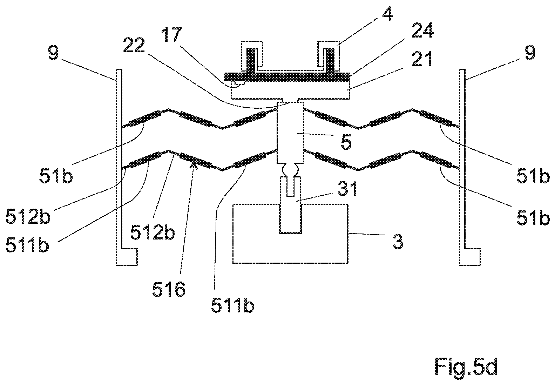

In addition, deviations in the **xy** plane resulting from vibrations are also prevented or at least minimized. To this end, one or more lateral damping devices **51** (Figures 4a, 4b, 4c, 5a, 5b, 5c, 5d) are arranged to prevent the lateral vibrations of the holder **2** and the sample **S** under preparation. Such an arrangement further increases the quality of the pattern and in consequence the resolution and the viability of the three-dimensional structure in the sample container **46.** In particular, the holder connection means **22** or the generator connection means **31** may be directly surrounded, or essentially directly surrounded, by a lateral damping device **51a** (Figure 4a). Alternatively, the holder connection means **22** and the generator connection means **31** are not directly connected to each other, but through an intermediate connector **5,** which is itself surrounded by a lateral damping device **51a** (figure 4b). Alternatively, the holder **2** is itself surrounded by a lateral damping device **51a** (Figure 4c). To this end, the edge of the holder **2** can for example be prolonged downward to form a skirt fitting with the lateral damping device **51a.** Such a lateral damping device **51a** may comprise a tube **510a,** surrounding either the holder connection means **22,** or the generator connection means **31,** or an intermediate connector, or the edge of the holder **2.** The lateral damping device **51a** further comprises a support **511a** which is independent from the pattern generator **3,** and which allows to maintain the tube **510a** in position.

The damping device mentioned herein may be important to provide a good quality of patterns. In particular, the damping elements may be arranged and designed to absorb at least a part of reflected waves and resonance frequencies interfering with pattern generation. Preferably, the damping elements are adapted to absorb all the frequencies not directly emanating from the pattern generator **3** so that the sample receives exclusively or substantially exclusively the waves produced by the pattern generator **3** without distortion.

The patterning device 1 may in addition comprise an illumination system allowing to visualize the sample during the process and after the process. In particular, pictures of the pattern may be easily taken by the picture recorder either in a continuous manner or at regular time intervals or after each step of a process. Such an illuminating system is thus independent from the transformation device D and any light system described therein for the transformation of the sample. The illumination system has no impact on the sample itself but merely allows to visualise it. The illumination system may thus provide the necessary light directly on the surface of the sample. The angle of illumination of the sample can be varied, providing illumination from the side, thereby allowing to improve visualization of the sample by exploiting the reflection of light from the sample surface at different angles, providing better contrast. Alternatively or in addition, the illumination system is configured to provide light from below the sample, so that the light crosses the sample and allows the picture recorder to image it. In other words, the illumination system is configured to allow backlighting the sample. Light used for illumination of the sample can be either non-polarized or polarized in order better visualize patterns forming under the surface of the sample. Different wavelengths of illumination can also be used in order to exploit fluorescent moieties potentially included in the sample for improved visualization or to improve visualization in other ways related to illumination by and absorption of specific wavelengths. Other combinations of polarizing and/or colour filters can be envisioned to be placed between the illumination system and the picture recorder 7 with the objective of improving visualization of the sample before, during and/or after patterning.

According to one embodiment, the illumination system is an external module being adapted or adaptable to the present patterning device so as to illuminate the sample. Such illumination system may thus be easily removed or exchanged, depending on the needs. Such a removable arrangement allows for example to adapt either the wavelength or the angle of illumination or to include or remove a backlight function.

According to another embodiment, the illumination system is integrated to the patterning device. For example it can be coupled or combined or integrated with the transformation device D or with another feature of the patterning device.

Figures 5a, 5b, 5c and 5d show alternative arrangements wherein the holder connection means **22** and the generator connection means **31** are connected by means of an intermediate connector **5** and wherein this intermediate connector **5** is connected to the frame **9** of the patterning device **1** by means of one or more flexible arms **51b.** Such flexible arms **51b** may comprise a rigid portion **511b** which prevents the lateral movement of the holder **2** and a flexible attachment **512b** at its extremities, allowing a vertical deviation of the holder **2** (figure 5a, 5b). Alternatively, the flexible arm **51b** may take the form of a leaf spring **513b** (figure 5c). One of the extremities of each leaf spring is linked to the frame **9** of the patterning device **1** and the other one is connected to the intermediate connector **5.** Alternatively, the flexible arms **51b** may comprise several rigid portions **511b** and several flexible parts **512b** to form a leaf spring specifically adapted to the holder **2.** Other arrangements or combination of these arrangements can be used. The flexible arms **51b** can be organized at one side of the intermediate connector **5** or at two opposite sides or, in case the patterning device **1** comprises **3** or more vertical pillars **9,** one or several flexible arms **51b** can be connected to each of these pillars **9.**

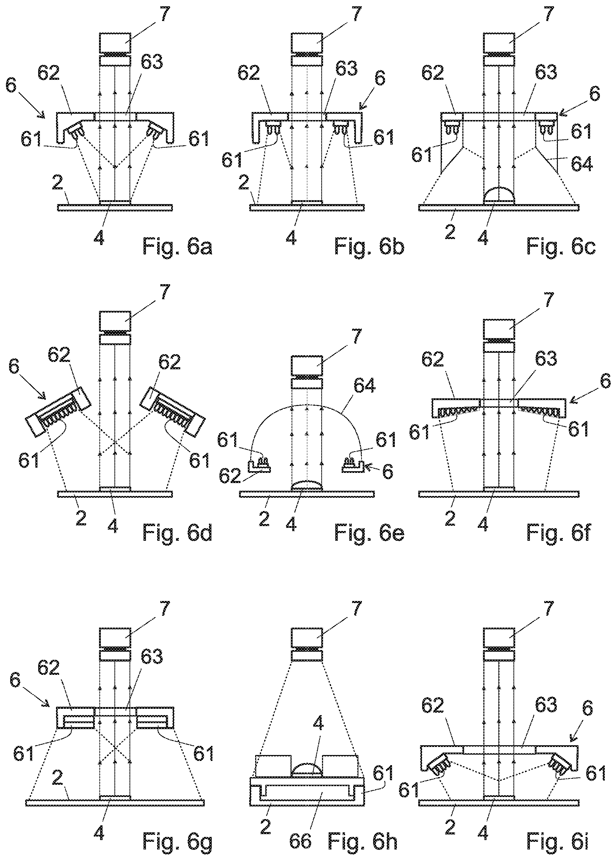

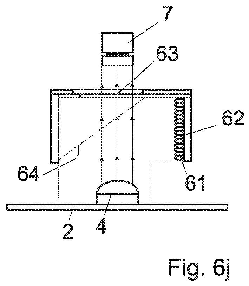

Figures **6a** to **6i** show various alternatives related to the light emitting system **6.** The light emitting system **6** comprises one or more emitting lights **61,** positioned on one or several light frame **62** in a way to irradiate the sample **S** in the sample container **46,** when it is positioned on the holder **2.** The emitting lights **61** are for example UV or UV-visible emitting lights usually applied for the polymerisation of chemical components reactive under these wavelengths, and present in the sample **S.** The emitting lights **61** may be traditional UV or UV-visible or specific LED or any suitable emitting device. Depending on the arrangement of the emitting lights **61,** the light emitting system **6** may comprise one or more reflecting surfaces **64** to focus the emitted light toward the sample **S** positioned on the holder **2.** The light frame **62** may be included to the holder **2** (Figure 6h) and irradiate the sample **S** from the bottom. In such a configuration, the plate **21** of the holder **2** comprises a recess **66** closed by a transparent sheet on which is placed the container fixation means **4.** A combination of one or more arrangements described herein is possible. For example, a light irradiation of the sample **S** may occur either from the bottom, either from the top, or from the edge, or from several of these directions. The light frame **62** or the group of light frames **62** are arranged in a way to maintain the sample **S** visible from the picture recorder **7.** For example, the light frame **62** can be circular with a central hole **63** corresponding to the optical pathway of the picture recorder **7.** The orientation of the emitting lights 61 or their distance with the sample **S**, or both the orientation and the distance may be manually or automatically adjustable.

The light frame **62** may be adapted to receive several types of different emitting lights **61,** irradiating for example in different optical spectral domains or at different wavelengths. In addition, the light frame **62** may be provided with infrared lights adapted for warming the sample **S.** This is particularly convenient when a temperature-induced polymerisation of the matrix **M** is necessary instead of a polymerisation triggered by UV irradiation. Different chemical components can even be included in the matrix **M** of the sample **S**, which may react under different conditions. The light emitting system **6** advantageously allows to activate alternatively several lights **61** or group of lights **61.**

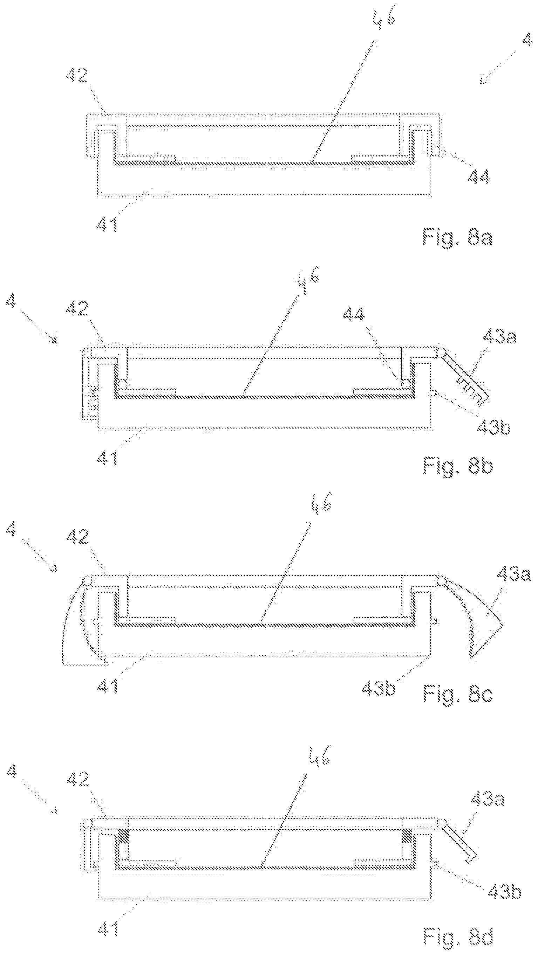

The container fixation means **4** may have any geometry. It can have for example a square, rectangular, circular, elliptical enclosure. Figures 8a, 8b, 8c, 8d show examples of containers fixation means **4.** The container fixation means **4** comprises a base **41** holding a sample container **46** in which are placed the matrix **M** and the particles P. The container fixation means **4** further comprises a removable cap **42** placed above the base **41** and adapted to fit, preferably hermetically fit, with the base **41.** The removable cap **42** can be adjusted on the edge of the base **41** and maintained merely by friction force (figure 8a). A sealing **44** may be placed between the base **41** and the removable cap **42** to increase the friction force while maintaining the container fixation means **4** closed, preferably hermetically closed. Alternatively, the removable cap **42** may be adapted to the base **41** by means of a cap clamping arrangement **43.** Such cap clamping arrangement **43** comprises for example a first member **43a** linked to the cap **42** and a second member **43b** linked to the base, the first **43a** and the second **43b** members being adapted to cooperate. The cap clamping arrangement **43** can be adjustable in such a way to be adapted for several closing positions (figures 8b, 8c). Several closing positions include either a progressive closing force (figure 7c) or several predetermined closing positions (figure 8b). Alternatively, only one closing position is allowed (figure 8d).

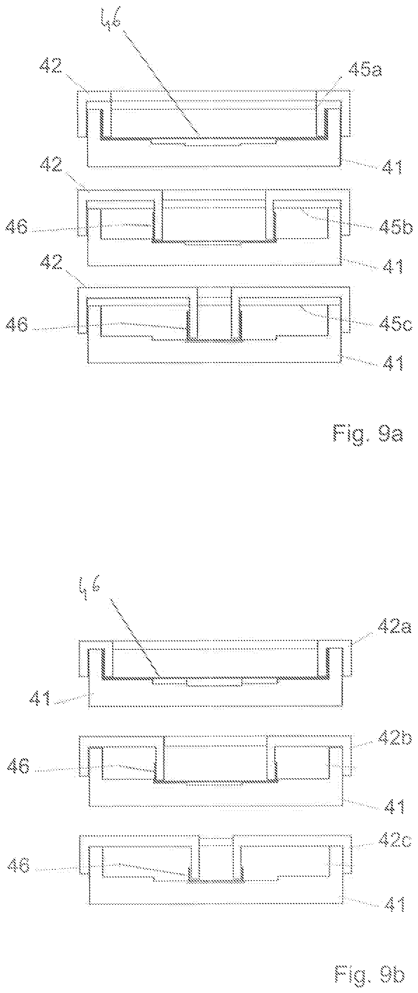

The container fixation means **4** may be itself modular. A given base **41** can be adapted to receive various types of caps **42.** Figure 9b shows various configurations wherein a given base **41** is combined with different caps **42a, 42b, 42c.** Such caps **42a, 42b, 42c** may be used to facilitate the fixation of sample containers **46** of different shape and dimensions on a given base **41.** Alternatively, a cap adaptor **45** can be used to facilitate the fixation of sample containers **46** of different shape and dimensions on a given base **41.** Figure 9a shows examples wherein a given base **41** is combined with different cap adaptors **45a, 45b, 45c.** A single removable cap **42** can thus be used with the base **41.**

The container fixation means **4** may be partly or fully transparent to light, and in particular to UV-visible light. Either the base **41** or the cap **42** of the container fixation means **4,** or both the base **41** and the cap **42,** can be transparent to such light. The cap **42** may also be fully transparent to such light or partially transparent to such light. The cap **42** and the base **41** may be independently made of glass, quartz, hard or soft polymer, or of a combination of these material.

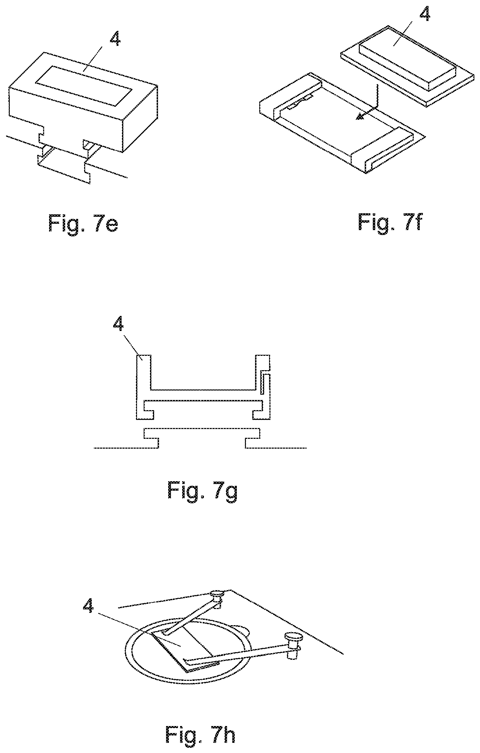

The container fixation means **4** is preferably fixed on the surface of the plate **21** of the holder **2** by a positioning means **100** allowing to removably position the container fixation means **4** on the holder **2** at a predetermined position. The positioning means **100** may be an intermediate element **101** having a first positioning element **100a** and a second positioning element **100b,** as shown in figure **7a****.** The first positioning element may be a spring adapted to maintain the container fixation means **4,** and the second positioning element may be a geometrical shape complementary to the geometrical shape of the holder **2** in such a way to secure the intermediate element **101** on the holder **2.** Such intermediate element **101** may comprise a spring combined to a clip (figure 7a), a rotative clip (figure 7b), a clamping holder (figure 7c, 7d), pressing arms (figure 7h). Alternatively, the container fixation means **4** may comprise itself the necessary positioning means, such as rails (Figure 7e, 7f) or flexible clips (figure 7g).

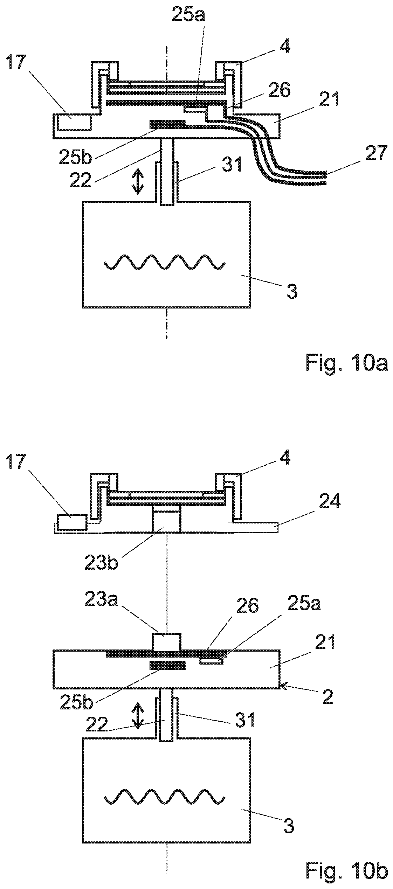

The plate **21** of the holder **2** may be arranged to directly receive a container fixation means **4.** To this end, it bears all the necessary container positioning means **100** to maintain the container fixation means **4** at the proper position (figure 10a). The plate **21** of the holder **2** is alternatively arranged to receive a container adaptor **24** (figure 10b). The container adaptor **24** allows to easily replace the container fixation means **4** on the holder **2,** including exchanging containers fixation means **4** adapted for sample containers **46** of different sizes or different shapes. The container adaptor **24** is maintained on the plate **21** of the holder **2** by means of an adaptor connexion means **23a, 23b.** The adaptor connexion means **23a, 23b** preferably allows to manually assembly or disassembly the container adaptor **24** from the plate **21.** The container adaptor **24** preferably comprises all the necessary container positioning means **100** to maintain the container fixation means **4** at the proper position once the container adaptor **24** is placed on the plate **21.**

In a preferred embodiment, the holder **2** may be provided with one or several sensors **25a, 25b.** One of a temperature sensor **25a** and a vibration sensor **25b** is at least included in the plate **21** of the holder **2,** preferably both temperature sensor and vibration sensor are integrated in, or combined to, the holder **2.** The plate **21** advantageously comprises in addition a thermal management device **26,** allowing to warm the container **46** including the particles **P** and the matrix **M** at a desired temperature higher than the ambient temperature. The temperature sensor **25a** together with the thermal management device **26** allow to regulate the temperature of the sample **S** under preparation. The temperature may be defined according to predetermined values or sequences of values adapted for the preparation of the samples **S** and in particular for the polymerisation of the chemical components present in the matrix **M.** The heat duration, the temperature ranges and the rates of temperature variation may be object of several programs. The temperature can thus be modulated between 20°C and 200°C, preferably, between 20°C and 100°C, most preferably between 20°C and 50°C. The thermal management device **26** may in addition be adapted to cool the sample S at a temperature below the ambient temperature, such as below 15°, or 10°C or 5°C. In a very most preferred arrangement, the thermal management device **26** is a temperature regulation device adapted to regulate or modulate the temperature of the sample S under preparation at a temperature comprised between around 4°C to around 40°C.

The thermal management device **26** may denote a distinct transformation device **D** allowing to transform the matrix **M** of the sample **S.** Alternatively, the thermal management device **26** is a part of a transformation device **D** comprising several heating devices such as a heating plate, a set of infrared lights, a microwave generator and any other devices usable to heat the sample **S** and transform the matrix **M.**

The plate **21** or the container adapter **24** may be provided with one or several levelling control means **17.**

The sensors **25a, 25b** included in the holder **2,** as well as the thermal management device **26** and any other electrical elements, may preferably be connected to a control unit **81** by means of electrical connectors **27** arranged on the holder **2.** Such electrical connectors **27** may be independently plugged to, or unplugged from the control unit **81.** Alternatively, the sensors **25a, 25b,** the thermal management device **26** and other potential electrical elements present in the holder **2** are automatically plugged when the holder **2** is placed on the pattern generator **3.**

The holder **2** may in addition be connected to, or equipped with a cooling device (not represented) adapted to cool or freeze the sample **S.** The cooling device can be integrated to the patterning device **1.** Any known cooling device may be used and adapted for this purpose.

Although the user can manually add or inject material to the sample **S**, for example before, during or after the patterning process under sound waves, the device **1** may advantageously be provided with an injection device **200** comprising one or more injectors **201** adapted to inject material into the sample container **46,** either to inject the matrix and particles into the sample container 46, on top of the particles **P** and the matrix **M** already present in the sample container **46,** or in the bulk of the matrix **M** already present in the sample container **46** (Figure 1c). The injection device **200** may be linked to the frame **9** of the device **1** in a way to be placed either above the sample **S** or remote from the sample **S.** A rotating connection means **202** can be used to this end. The injection device **200** can be used to add particles **P,** matrix **M** or matrix elements or any other material to the sample **S** under preparation, as well as a combination of several different elements. The chemical components, as well the biological components, present in the added material may be different from the chemical and/or biological components already present in the sample container **46.**

Using such an injection device **200** integrated to the patterning device **1** facilitates the production of the three-dimensional structures. In particular, layers L having different matrices **M** may be arranged one on top of the other. Such injection device **200** is preferably adapted for injecting biomaterials which participate to the production of the three-dimensional structures. The injection device 200 is adapted for any kind of injection activities and not limited to the 3D bio-printing activities. In one embodiment, such injection device **200** preferably denotes a 3D bio-printing device, adapted for the 3D printing of biomaterial.

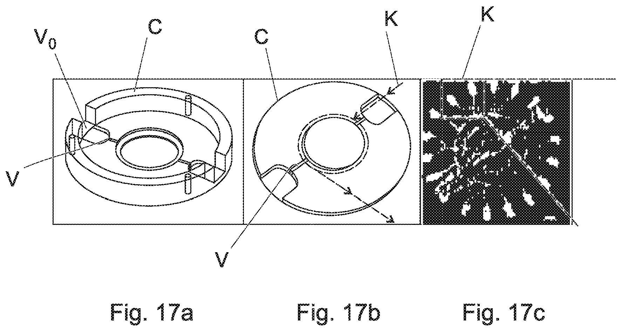

Alternatively or in addition an injection device **200'** can be used for the 3D printing of material not directly included in the three-dimensional structures. For example, accessories may be printed on demand using a non-biological material. The term accessories denotes any device or feature used in the preparation of the three-dimensional structures, including the sample containers **46** and any functional element which can be integrated or combined with the sample containers **46.** In particular, the sample container **46** can be produced on demand with a predetermined geometry. Examples of sample containers **46,** and the resulting patterns are shown on figures 17a, 17b and 17c. In this example, circular sample container **46** is provided with a channel **V** crossing the internal space of the sample container **46.** The channel **V** may have itself any geometry and participates to the geometry of a given sample container **46.** Such a channel **V** provides at least one opening **Vo** at the periphery of the sample container **46** allowing to include additional material to the biomaterial filled in the sample container **46.** As shown in figure 17b, the channel **V** may have a circular shape in the internal space of the sample container **46.** The geometry of such a channel **V** is of course not limited to this specific geometry. Other shapes comprising several openings may be provided, or a web of channels may alternatively be built in the sample container **46.** The channel **V** may be used to circulate a nutritive fluid **K** such as artificial or non-artificial blood, physiological fluid or any other relevant material needed for the growing and the viability of the three-dimensional structure. Figure 17C shows a resulting three-dimensional structure wherein the cells are organized according to a specific pattern and irrigated by the circulating fluid **K.** Thus, the geometry of a sample container **46** should be understood as including its peripheral shape as well as any other internal shape or combination of shapes. It should also be understood that although the sound wave pattern is also determined by the peripheral geometry of a given sample container **46,** this does not exclude to incorporate additional three-dimensional shapes internal to the sample container **46.**

The geometry of the sample containers **46** can be determined based on the expected pattern of the particles **P** resulting from the sound wave exposure. For example, a library **B** comprising sets of parameters (**B1**...**Bm**). Each set of parameters corresponding to a given experiment, can be used to determine the most adequate geometry of the sample container **46** according to a known pattern recorded in the library **B.** The patterns may be recorded to the library **B** by means of the picture recorder **7** or by any other suitable recording device. In such a set of parameters, the term "m" denotes an integer comprised between **1** and around 100, preferably between 1 and around 50. Such parameters include one or more of the sound wave characteristics such as its amplitude **A** and its frequency **F**, the geometry of the sample container **46,** the rheological characteristics of the matrix **M** and any other relevant parameters such as the nature of the particles **P, the** environmental conditions such as the temperature, the atmosphere conditions, the pressure conditions, the gravity conditions and any other monitored parameters of the experiment.

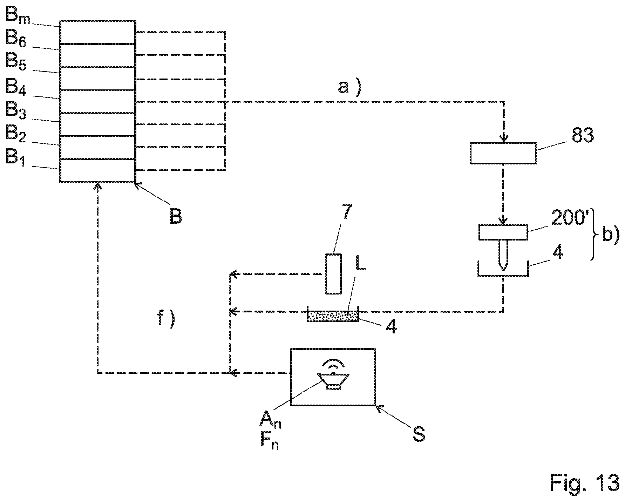

According to an optional embodiment, the geometry of the sample containers **46** may be created based on a library **B** comprising several sets of parameters (**B1...Bm**) using a computing program or an artificial intelligence module such as the artificial intelligence **83** of the patterning device 1 (figure 13). Such an artificial module **83** may be integrated or combined to the command unit **81.** Such artificial module **83** can be integrated to the patterning device **1** or remote to the patterning device **1** and connected to it by means of usual communication means such as internet or private protocols. A secure connection protocol may be envisaged for allowing access to authorized users. A library **B** may also be integrated to the patterning device **1,** or remote to the patterning device **1.** Access to the library **B** may be done through secure protocols.

The patterning device **1** may comprise one or two different injection devices **200,** a first injection device **200** being dedicated to the injection of biomaterial to the sample S, including the 3D-bio-printing, and a second injection device **200'** being dedicated to the 3D printing of the accessories. Alternatively, a single injection device can be used, wherein the elements of the injection device **200** such as the cartridges and the nozzle and any other features adapted for the 3D-printing of material, can be exchanged or replaced according to the need.

According to an important aspect, the injection devices **200** integrated to, or combined with, the patterning device 1 is adapted to inject material at predetermined positions on the surface or in the bulk of the sample **S.** To this end, it is movable at least in two planar directions **X, Y.** It may in addition be able to move in a vertical position along the **Z** axis. In addition, the injection device **200** may be oriented in a position different than the vertical position. It may be provided with usual articulation means, in a way to allow its displacement, or the displacement of a part of the injection device **200,** over six degrees of freedom. The positioning of the injection device **200** can be precisely piloted by a control unit **81.** The additional material injected to the sample **S** includes the particles **P,** as above defined, one or more matrix components or a mixture thereof. The injected particles **P** may be the same of the particles **P** already present in the sample **S** or different.

In case an injection device **200'** for injecting non biomaterial is integrated to or combined with the patterning device **1,** it is movable at least in two planar directions **X, Y.** It may in addition be able to move in a vertical position along the **Z** axis. In addition, the injection device **200'** may be oriented in a position different than the vertical position. It may be provided with usual articulation means, in a way to allow its displacement, or the displacement of a part of the injection device **200',** over six degrees of freedom. The positioning of the injection device **200'** can be precisely piloted by the control unit **81.**

In addition, the injection devices **200, 200'** are adapted to inject predetermined volumes. The activation of the injection devices and the injected volumes can be precisely piloted by the control unit **81.**

The polymerisation process of the matrix, in each layer may be identical or different from one another. A matrix **M1** of a first layer **L1** may for example be polymerised under light irradiation and the matrix **M2** of a second layer **L2** may be polymerised under heat, depending on the properties of the chemical components in each of the matrices **M1, M2.** The heat may be provided either by the light emitting system **6,** in case infrared lights are present, or by the heating thermal management **26** or by both emitting system **6** and the thermal management device **26.**

The pattern generator **3** comprises one or several vibration generators **32** or set of vibration generators **32** either all identical or different. Each vibration generator **32** or set of vibration generators **32** of the pattern generator **3** is adapted to provide a wave vibration which is transmitted to the sample **S** through the holder **2.** The vibration generators **32** can be for example mechanically connected to the generator connection means **31** to transmit the vibration to the sample **S** through mechanical vibration (figure 1a). The vibration generators 32 can also be speakers generating sound waves and transmitted to the sample S through air or another appropriate medium. Alternatively or in addition, the pattern generator **3** comprises one or more vibration generators **32** arranged near the holder **2,** and not being mechanically connected to the generator connection means **31** (figure 1c). The the vibration generated by such vibration generators **32** is directed to the holder **2** and allows the sample **S** to vibrate in a predetermined way.

According to an embodiment, the pattern generator **3** comprises or is connected to several vibration generators **32** arranged in a three-dimensional space (figure 1d). In particular, vibration generators **32c** may be arranged under the holder **2,** vibration generators **32d** may be arranged above the holder **2,** vibration generators **32a, 32b** may be arranged beside the holder **2,** in such a way to provide multiple sources of vibrational waves. The vibration generators **32c** and **32d** provide vibration sources on different planes. It should be understood that the vibration generators **32d** may be under the holder **2** on a different plane than the vibration generators **32c.** Superimposed layers **L** of the sample **S** may thus be exposed to specific vibration sources. The vibrations may in addition be combined to provide in a given layer **L** a specific pattern. Layers **L** having an increased thickness compared to the known processes can then be used to build a pattern under exposure to vibration. Alternatively or in addition, lateral vibration generators **32a, 32b** are provided. The waves originating from these lateral vibration generators **32a, 32b** may be used sequentially with the waves originated from the planar vibration generators **32c, 32d,** or concomitantly. The patterning device **1** as such arranged allows to provide a three-dimensional pattern in a given layer **L**, instead of a bi-dimensional pattern usually obtained under exposure to vibrational waves. Such apparatus allows to improve the speed and the diversity of the produced three-dimensional structures.

The holder **2,** and consequently the container fixation means **4,** including a sample container **46,** may be surrounded by walls defining a closed space **35.** Such closed space **35** allows to place the sample **S** under special conditions such as special atmosphere, or specific pressure conditions, or specific temperature conditions or special gravity conditions, or a combination of several specific conditions. Special atmosphere includes oxygen rich atmosphere and oxygen poor atmosphere or oxygen free atmosphere. Specific pressure conditions include high pressure conditions such as 2, 3, 4 or more bars pressure, as well as pressure lower than the ambient pressure, which can be reached by means of one or more vacuum pumps. Special gravity conditions mainly include 0-gravity conditions or almost 0-gravity conditions, at least reduced gravity conditions.

The holder **2** may in addition or alternatively be connected to the pattern generator **3** by an actuator **36** allowing a vertical adjustment of the position of the sample **S** in the closed spaced **35.** When vibration generators **32a, 32b** are arranged along the vertical **z** axis, the height of the sample **S** can be modulated by means of the actuator **36,** in such a way to properly receive the waves originating from the vibration generators **32a, 32b.** In addition, the holder **2** may be precisely placed at a convergence of various wave sources to provide a specific pattern.

The various elements of the patterning device **1,** although separately described for ease of presentation may be combined without restriction. The patterning device **1** can then be conceived as a modular arrangement. The combination of the above described elements, including the pattern generator **3,** the transformation devices **D,** the injections devices **200, 200',** allow to produce a three-dimensional structure without or substantially without displacement of the sample **S.** In other words, all the steps necessary to produce such three-dimensional structures can be performed by means of the patterning device **1.**

According to an important aspect, the patterning device **1** comprises all the necessary functional elements such as to perform the preparation of the three-dimensional structures without or substantially without manipulating the sample **S.** In other words, all the necessary steps are performed with an optimised time and reproducibility. In addition, all the steps or substantially all the steps of the process can be performed at a point of care.

The closed space **35** may be provided by a closable opening comprising a cap **38,** preferably placed on the top. Such closable opening **37** allows the injection of additional material by means of an injection device **200.** Alternatively, such an injection device **200, 200'** is included to, or integral with the closed space **35.** The top wall of the closed space **35** comprises also a transparent area allowing the light irradiation of the sample **S** and image recordation. The transparent area may be provided on the cap **38** of the closable opening **37.**

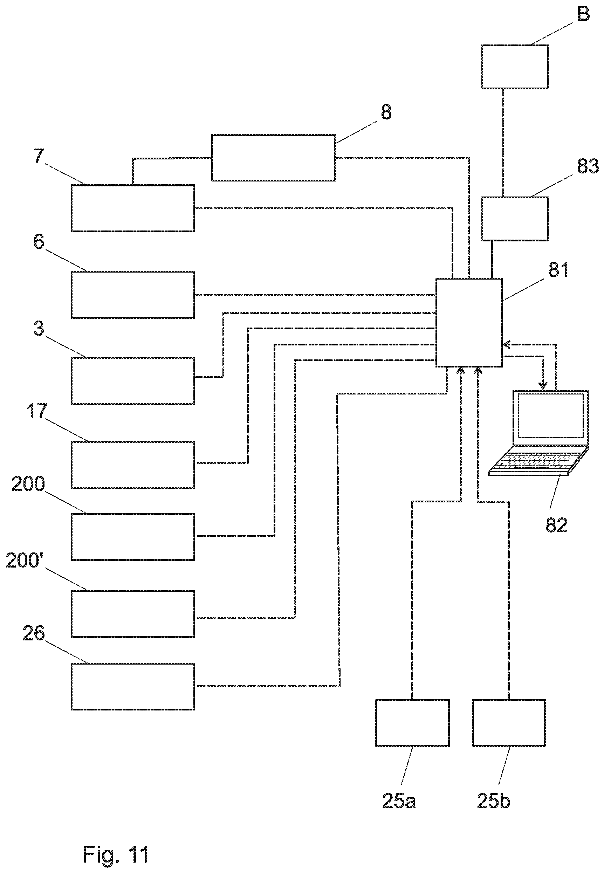

The patterning device **1** further comprises a control unit **81** adapted to pilot the functional elements of the patterning device **1** (figure 11). In particular, the control unit **81** is adapted to switch on or off the image recorder **7,** the pattern generator **3,** the light emitting system **6,** and/or one or more injection devices **200, 200'.** In addition, the control unit **81** is adapted to receive information from one or several sensors such as the vibration sensor **25b,** the temperature sensor **25a,** the image recorder **7,** the levelling control means **17** and any other sensor. The control unit **81** pilots the above elements of the patterning device **1** according to a predetermined program or under instructions from the user. Any predetermined program or instructions from the user may be transmitted to the control unit **81** through a human machine interface (HMI) **82,** such as a keyboard, a tactile screen or any other known human machine interface.

The control unit **81** may in addition by connected to the picture analyser **8** and receive from such a picture analyser **8** the images of the pattern appearing in the sample **S** under preparation. The control unit **81** may thus automatically recognize whether the pattern under preparation is conform to the expected pattern or not. The control unit **81** can then automatically pilot the elements of the patterning device **1** according to the images of the pattern under preparation. As an example, the control unit **81** may activate the pattern generator **3** according to a predetermined program, comprising a predetermined frequency or set of frequencies, a predetermined time duration, and a predetermined amplitude of the sound wave, while the picture recorder **7** allows to monitor the pattern formation. When the pattern is considered corresponding to a predetermined targeted pattern, the control unit **81** can activate a transformation device **D** such as the light emitting system **6** or a thermal management **26** to transform the matrix **M** of the sample **S** into a modified matrix **M',** wherein the particles **P** are no longer able to migrate. Alternatively, the control unit **81** may be adapted to activate a transformation device **D** before the pattern is fully reached is such a way to limit or avoid the diffusion of the particles **P** in the matrix **M** once they reach the proper position. Alternatively, the control unit **81** may activate both pattern generator **3** and a transformation device **D** in order to allow the matrix **M** to be progressively transformed into a modified matrix **M**' during the migration of the particles **P.**

According to an embodiment, the picture recorder **7** can be connected to the library **B** and store the pictures recorded, such as final patterns obtained at the end of series of steps including at least a patterning step and a transformation step. Such picture of pattern may be associated to several other parameters in the library **B** including the sound wave parameters such as the amplitude **A** and the frequency **F,** and the geometry of the container **46** in which the patterning was done.

Regarding the migration of the particles **P** in the sample **S**, the control unit **81** may activate a heat plate to increase the fluidity of the matrix **M** in case the migration of the particles **P** is judged too slow or inappropriate. Such matrix **M** remains non-transformed under the heating of the thermal management device **26,** and can then be polymerised or crosslinked under UV irradiation once the particles **P** have reached the expected position.

The patterning device **1** can further comprise, or be connected to, an artificial intelligence module **83** (figure 11). Such an artificial intelligence module **83** may be used to automatically determine the suitable conditions to produce a predetermined pattern. It can further be used for the modelling of the patterns based on the pattern actually produced and stored in the library **B.**

According to an embodiment, the artificial intelligence module **83** can be used to determine the geometry of a sample container **46** according to the geometry of a pattern to be obtained.

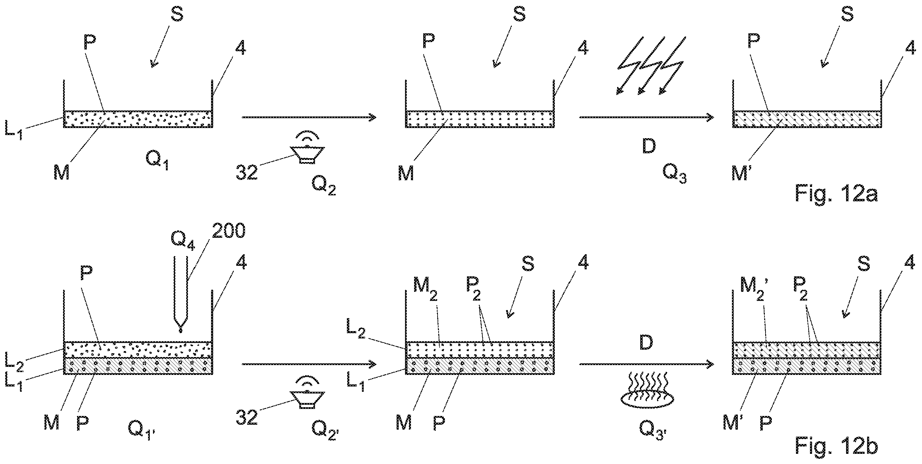

The present invention further comprises a process of producing a three-dimensional structure based on particles **P** spread in a matrix **M**, as illustrated in figures 12a and 12b. The process comprises a dispersion step **Q1** wherein the particles **P** are homogeneously spread in a first layer **L1** of a matrix **M**, which is fluid enough to allow an easy migration of the particles **P.** The dispersion step **Q1** may involve a homogeniser or a movable table or any other mixing apparatus adapted for the homogenisation of the particles **P** in the matrix **M.** Alternatively, the dispersion step **Q1** may involve the pattern generator **3,** such as to produce vibrations allowing to homogenise the particles **P** in the matrix **M.** The dispersion step **Q1** may be optional when the particles **P** are already homogeneously mixed with the matrix **M.**

The process may include a preliminary loading step **Qa** of loading a sample container **46** with a matrix **M.** The loading step **Qa** allows to fill a sample container **46** with a predetermined quantity of a predetermined matrix **M.** In case the matrix **M** already contains the requested particles **P,** the dispersion step **Q1** may be optional. The loading step **Qa** may be followed by injection of additional material, even in case the particles **P** are already present in the matrix **M.** Such injection of additional material may be done manually or by means of one or more integrated injection device **200.**

According to a preferred embodiment, the particles **P are** homogeneously or regularly dispersed in the matrix **M**, over the plane defined by the x and y axis. The particles **P** are in addition homogeneously or regularly dispersed in the matrix **M** over the thickness of the matrix **M**, meaning over the vertical axis z. In other words, no gradients of the particle concentration within the matrix **M** are expected before the sound wave patterning step is applied. More particularly, the viscosity of the matrix **M** is adapted to maintain the particles **P** homogeneously suspended in the matrix **M**, while allowing their migration under sound wave application. The particles **P** are thus not allowed to fall at the bottom of the sample container **46** before vibration waves are applied.

A patterning step **Q2** is then applied in a way to migrate the particles **P** in the matrix **M** according to a predetermined pattern. The process comprises a transformation step **Q3** wherein the matrix **M** is modified to a matrix **M',** such as to prevent the migration of the particles **P.** Such a transformation step **Q3** may be performed by means of a transformation device **D** of the patterning device **1** such as the light emitting system **6** or the thermal management device **26** or any other transformation device **D** the patterning device **1** comprises.

The dispersion step **Q1,** the pattering step **Q2** and the transformation step **Q3** may be performed sequentially, meaning that each of the necessary device such as the pattern generator **3** and the transformation device **D** are activated and inactivated one after the other. Alternatively, these steps may overlap or partly overlap each other, meaning that two or more of the pattern generators 3 and the transformation devices **D** can be concomitantly activated.

The process may further comprise a second dispersion step **Q1',** wherein particles **P2** are dispersed in a second layer **L2** of a second matrix **M2.** The second dispersion step **Q1'** may be performed in the same way as the first dispersion step **Q1** or differently. The second dispersion step **Q1'** may be optional in case the particles **P2** are already homogeneously dispersed in the corresponding matrix **M2** at the time the matrix **M2** is placed with the sample **S.** The particles **P2** may be identical or different from the particles **P.** The second matrix **M2** may be identical, similar, or different from the matrix **M.** In particular the second matrix **M2** may be transformed during the transformation step **Q3'** under conditions different from the transformation step **Q3** of the matrix **M**, such as a different transformation device **D** needs to be activated. For example, in case the transformation step **Q3** of the matrix is done under light irradiation, the transformation step **Q3'** of the second matrix **M2** can be performed under heating. The reverse transformation steps **Q3** and **Q3'** can be applied.

According to an important aspect, several of the dispersion step **Q1,** the patterning step **Q2** and the transformation step **Q3** are performed without manipulating the sample container **46,** meaning that the sample **S** remains in place during all the process or during a substantial part of the process. This is even the case when several layers L are built. This is also the case when the several layers L are sequentially built one on top of the other one.

The process may in addition comprise at least one step **Q4** of injecting additional material on top or in the bulk of a layer without manipulating the sample container **46.** Such injection may be performed manually. Preferably, the injection device **200** is used to this end. Such injection of additional material may be performed before or after the sound wave application. Alternatively, injection of additional material can be performed by means of the injection device **200** during the patterning of the sample **S** under sound wave application. It has to be understood that the injection device **200** can be used on demand at any time in the patterning process, in such a way that the sample **S** has not to be manipulated, and in such a way that concomitant actions can be applied to the sample **S.** For example, additional material may be injected to a given matrix **M** in a continuous way at one or more precise locations by means of the injection device **200,** while waves are applied to the sample **S.**

The process according to the present disclosure results to a three-dimensional structure of particles within a matrix. In particular, the present process excludes removal of material such as the matrix surrounding the patterned particles.

The combination of the patterning technology and the injection of material, and in particular with the 3D-printing or additive manufacturing processes, allows to produce highly regular patterns comprising irregular or random particle distributions. Such arrangement is particularly advantageous for example for research tests or investigations.

The process may in addition comprise several steps of determining the geometry of a sample container **46** and printing on demand the sample container **46** having the determined geometry. Such 3D printing of non-biomaterial can be performed by means of an injection device **200'** integrated to the patterning device **1** or distinct from the patterning device **1.** More particularly, the process can comprise a selection step a) wherein the geometry of a given sample container **46** is predetermined according to the targeted geometry of the pattern to be produced in a given layer L. The selection of the geometry of the sample container **46** considers several parameters such as the amplitude A and the frequency F of the sound waves **W** to be applied to a layer **L** wherein particles **P** are dispersed in a matrix **M.** In addition, the nature of the matrix **M**, or its composition, or at least its rheological properties can be considered since these parameters also influence the behavior of the particles **P** under sound wave exposure. The selection step a) can be performed based on previous sets of parameters **B1...Bm,** stored in the library **B.** The selection step a) may in addition involve the artificial intelligence programs loaded in the artificial intelligence module **83,** or in another artificial intelligence module, and educated for this purpose.

According to an aspect of the present disclosure, the artificial intelligence unit **83** allows to instantaneously analyse images of the patterned particles during the patterning process and compare such images to a predetermined targeted pattern. The artificial intelligence unit **83** thus allows to modulate or provide instructions to the control unit **81** so as to adapt the pattern generator accordingly until the desired pattern is obtained, either exactly or with a minimal acceptable deviation.

Once the geometry of a sample container **46** has been determined in the selection step a), the corresponding sample container **46** is produced. It is preferably produced on demand in a container production step b). The container production step b) advantageously uses the additive manufacturing technologies, and more particularly the injection device **200'** described above. Although the sample container **46** can be produced with any material adapted for the 3D-printing technology, such as polystyrene or related polymers, the sample container **46** is preferably made of biocompatible polymers such as polyvinyl alcohol or any other biocompatible polymers and mixtures thereof. In case crosslinking step is necessary, the chemical components and the polymerization conditions are selected to not damage the living material under preparation. The 3D printing process of the sample container **46** is for example performed at ambient temperatures or temperature below 40°C, preferably at a temperature comprised between around 20°C and around 35°C. In case a UV crosslinking is performed, the light irradiation is preferably determined to not damage the living material under preparation.

A loading step Qa) as defined above allows to fill the sample container **46** with a matrix **M** and particles **P.**

The patterning step Q2) and the transformation step Q3) above described are then applied.

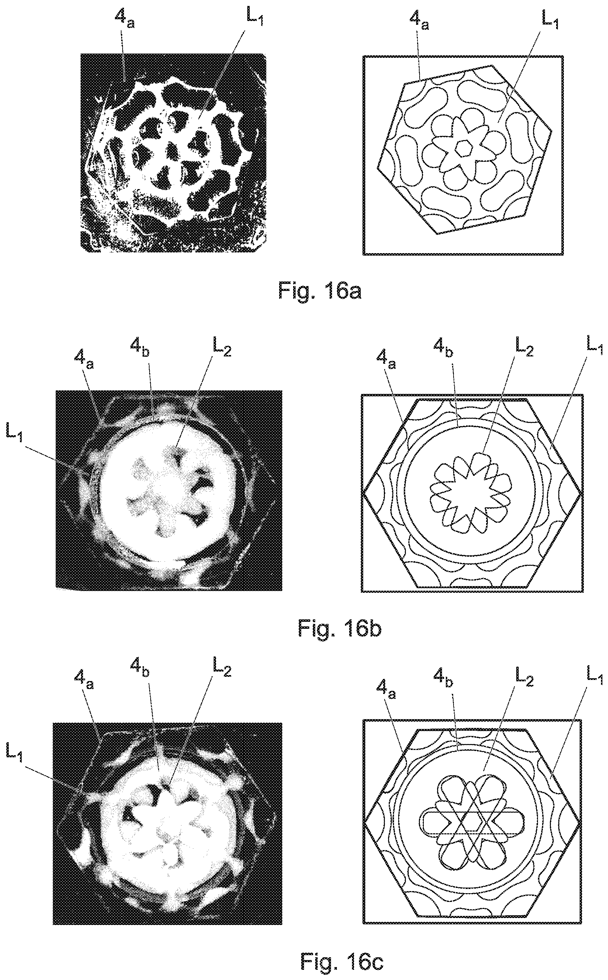

Figures 16a, 16b and 16c provide an example where a first sample container **4a** having a hexagonal geometry is filled with a first matrix **M1** comprising a first type of particles **P1** to form a first layer **L1** having a first pattern. Figure 16b shows a second layer **L2** having second pattern, produced based on a second sample container **4b,** having round geometry. The second sample container **4b** is placed on top of the first layer **L1.** Figure 16c shows an alternative second pattern obtained on the basis of a round shaped second sample container **4b.**

As an example, the patterns shown in figures 16b and 16c where obtained as follows:
- The matrix **M** was made of the hydrogel : Gelatin 70% methacryloyl (GelMA 70%) 5% w/v photoresist (Irgacure).
   For the first layer L1, 800µl were loaded into a squared frame;
   For the second layer: 400µl were loaded into a circular frame;
- The particles P were Tricalcium phosphate (TCP) with dimension comprised between 32 and 75µm;
- The vibration frequency was selected as follows :
   For the first layer **L1 :** 78 Hz;
   For the second layer **L2** (figure 16b): 60Hz;
   For the second layer L2 (figure 16c): 65Hz;
- The vibration duration was selected as follows :
   Less than 10 seconds for the first layer **L1** and less than **10** seconds for the second layer **L2** after the liquid motility is reached by tuning frequency and amplitude;
- The temperature was selected as follows:
   GelMA temperature: 37°C;
   Experimental temperature: room temperature (25°C);
- The transformation of the matrix **M** was performed as follows :
   Each layer of the sample was crosslinked in two steps:
   First, once the pattern is formed a mild UV-light was placed on top to stabilize the pattern through partial crosslinking;
   Second, the patterning chamber was then moved into a UV-light oven for complete the crosslinking of the hydrogel.
   The crosslinking process took place at room temperature (25°C) with a UV-light wavelength of 365 nm.

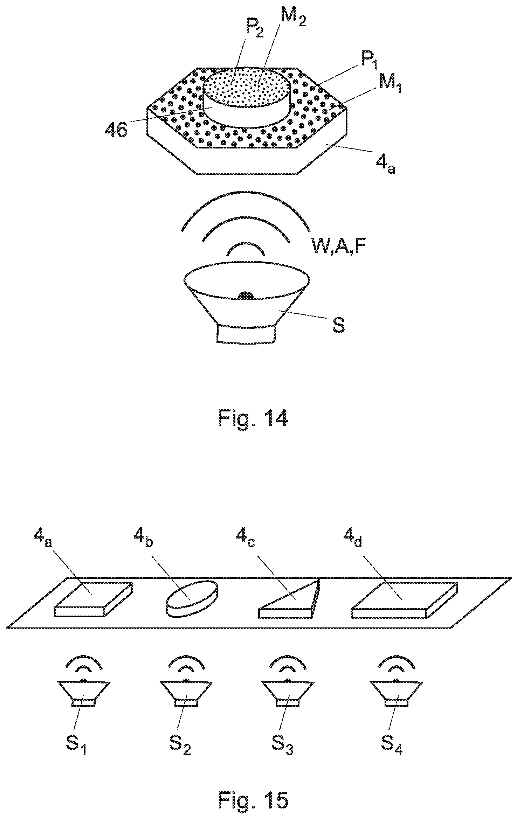

The process described above allows to produce several layers (Ln) wherein "n" denotes an integer comprised between 1 and 50, preferably between 2 and 10. According to one embodiment, the different layers **L1** to Ln are produced in parallel or sequentially in an individual manner, meaning that each layer **L1** to **Ln** is produced independently from the other ones, as shown for example in figure 15. In case of a parallel production, several sample containers **4a** to **4e** are exposed to sound waves **W1** to **Wn** originating from several independent pattern generators **S1** to **Sn**. The geometry of each of the sample containers **4a** to **4n** as well as the characteristics of the sound waves **W1** to **Wn** are individually determined and may differ from one sample container **4n** to the other one. Once the layers Ln are produced, they can be combined to make the expected three-dimensional structure.

According to another embodiment, the layers **L1** to Ln are sequentially made and combined, meaning that once a given layer Ln is produced, the following layer **Ln+1** is produced above the preceding layer Ln. In other words, after a pattern has been produced in a sample container **4n,** the container **4n+1** of the next rank **n+1** is placed on the top of the previous layer **Ln.** It has the geometry adequate for this expected new pattern. This new sample container **4n+1** is then filled with the corresponding particles **Pn+1** dispersed in the suitable matrix **Mn+1,** and the experimental conditions, comprising the sound wave amplitude **An+1** and frequency **Fn+1,** are applied to produce the requested pattern. The polymerization of the matrix **Mn+1** is then performed under the suitable transformation conditions. When this approach is followed, the sound waves are applied to the combination of the sample containers **4a** to **4n** related to the layers **L1** to **Ln** already prepared in addition to the layer **Ln+1** under preparation. The particles **Pn** should remain immobilized in the previously modified matrices **Mn** of these produced layers **Ln.**

A recording step f) may occur at the end of each producing cycle, a producing cycle comprising the selection step a), the frame production step b), the filling step c), the patterning step d) and the transformation step e) above described. In case the layers **L1** to **Ln** are sequentially made on top one of another, the monitoring steps may be used to monitor the layers already built and verify whether they have not be damaged under the iterative conditions of the process.

When all the layers **L1** to **Ln** are produced and stacked, the process may include an incubation step g) wherein the living material of the three-dimensional structure is allowed to grow to produce the expected biological tissue.
- 1: Patterning device
- 10: Damping devices
- 10a, 10b: Silent block
- 11: foot
- 12a,12b: Rotatable connector
- 13: Guide
- 14: Locker
- 15: Support
- 16: Counterweight
- 17: levelling control means
- 2: Holder
- 21: Holder plate
- 22: Holder connection means
- 23a, 23b: Adaptor connection means
- 24: Container adaptor
- 25a, 25b: Sensors
- 26: Thermal management device
- 3: Pattern generator
- 31: Generator connection means
- 32: Vibration generators
- 4: Container fixation means
- 41: Base
- 42: Removable cap
- 43: Cap clamping arrangement
- 44: Sealing
- 45, 45a, 45b, 45c: Cap adaptor
- 46, 4a, 4b, 4c, 4d: Sample containers
- 48a,: Individual dish
- 48b: wellplate
- 5: Intermediate connector
- 51, 51a, 51b: Lateral damping device
- 6: Light emitting system
- 61: Emitting lights
- 62: Light frame
- 63: Hole
- 7: Picture recorder
- 8: Picture analyser
- 9: Frame
- 81: Control unit
- 82: Human Machine interface
- 83: Artificial intelligence module
- 100: Container positioning means
- 100a: First positioning element
- 100b: Second positioning element
- 101: Intermediate element
- 200: Bio-injection device
- 200': Injection device for non-biological material
- D: Device for the chemical transformation of the sample
- L, L1, L2: Layers
- P: Particles
- M: Matrix

- S: Sample

## Claims

1. A patterning device (1) for the preparation of three-dimensional structures of a sample (S) comprising particles (P) suspended in a matrix and free to migrate in said matrix (M), said three-dimensional structures resulting from the combination of several patterns, the patterning device comprising
- a pattern generator (3), comprising at least one vibration generator (32) or set of vibration generators (32) allowing to apply sound or other vibrational waves to the sample (S) so as to generate a pattern said pattern being a non-homogenous arrangement of the particles in the matrix,
- one or several holders (2) connected to the pattern generator (3) and adapted to hold a sample container (46) comprising the sample (S),
- at least one picture recorder (7) focused on said sample (S) so as to monitor said pattern before, during or after sound wave exposure of the sample (S), said at least one picture recorder (7) being coupled to a picture analyser (8),
- a frame (9) wherein said picture recorder can be adjusted, **characterized in that** said frame (9) being place on several feet (11), at least one feet is adjustable, the frame (9) being adjustable so as to maintain said holder at a horizontal position, and **in that** the patterning device (1) further comprises
- at least one transformation device (D), including at least one light emitting system (6), adapted for the transformation of the matrix (M) into a modified matrix (M') wherein the particles (P) are no longer free to migrate, while remaining non-linked to each other and arranged according to said pattern,
- a control unit (81) adapted to pilot said pattern generator (3), said at least one transformation device (D) and said picture recorder (7) according to a program or user instructions so as to produce a three-dimensional structure substantially without sample displacement, said control unit (81) being further adapted to receive images of patterns under preparation from said picture analyser (8) and automatically recognize whether said pattern is conform to an expected pattern.

2. Device according to claim 1, wherein the at least one transformation device (D) further includes a thermal management device (26).

3. Device according to claims 1 or 2, wherein the at least one transformation device (D) can be used concomitantly or sequentially to the pattern generator (3).

4. Device according to any one of claims 1 to 3, wherein the holder (2) comprises at least one of a temperature sensor (25a) and a vibration sensor (25b).

5. Device according to any one of claims 1 to 4, wherein said patterning device comprises one or more lateral damping means (51) arranged to absorb at least part of the reflected waves and resonance frequencies interfering with the pattern generation.

6. Device according to one of claims 1 to 5, wherein said control unit comprises or is connected to an artificial intelligence unit (83) adapted to automatically determine the conditions to produce a predetermined pattern and/or modelling the patterns based on the patterns actually produced, and/or determining the geometry of a sample container.

7. Device according to any one of the preceding claims, said particles being selected from inorganic particles, organic particles or biological particles designating living material or mixture thereof.

8. Device according to claim 1, wherein the at least one vibration generator (32) or set of vibration generators (32) emits waves from positions lateral to the sample (S).

9. Device according to any one of preceding claims, wherein it further comprises at least one injection device (200, 200') adapted for the 3D-bio-injection of biomaterial, said at least one injection device being linked to said frame (9), the position and activation of said at least one injection device (200, 200') being piloted by said control unit (81).

10. A process for producing a three-dimensional structure of particles in a sample (S) comprising particles (P) free to migrate in a layer (L1) of a matrix (M), by mean of a device according to one of claims 1 to 10, comprising
- a patterning step (Q2) of arranging the particles (P) in said layer (L1) under application of sound waves to the sample (S) such as to reach a predetermined pattern, said pattern being a non-homogenous arrangement of the particles in the matrix and
- a transformation step (Q3) of modifying the matrix (M) into a modified matrix (M') wherein the particles (P) are no longer free to migrate, while remaining non-linked to each other and arranged according to said pattern,
wherein the patterning step (Q2) and the transformation step (Q3) are performed by means of said control unit (81) according to a program or user instructions so as to produce a three-dimensional structure substantially without sample displacement.

11. Process according to claim 10, wherein it further comprises second patterning step (Q2') of arranging second particles (P2) in a second layer (L2) of a second matrix (M2) under application of sound waves to the sample (S) in order to create a second predetermined pattern, and a second transformation step (Q3') of modifying the second matrix (M2) into a modified second matrix (M2') wherein the second particles (P2) are no longer free to migrate, **characterized in that** the second layer (L2) is on top of the layer (L1).

12. Process according to claims 10 or 11, wherein it further comprises one or more injection steps (Q4) of injecting additional material in, or on top of, one or the other layers (L1, L2), **characterized in that** said one or more injection steps (Q4) are performed by means of an injection device (200) integrated or combined to the patterning device (1).

13. Process according to any one of claims 10 or 12, wherein it further comprises one or more container production step b), wherein one or more sample container (46) are printed on demand by means of an injection device (200').

14. Process according to claim 13, wherein said sample container (46) has a geometry predetermined according to the geometry of the targeted pattern.

15. (S) having a three-dimensional structure, wherein said sample (S) is printed under sound waves according to the process of claims 10 to 14.

## Patentansprüche

1. Eine Mustergenerierungsvorrichtung (1) zur Anordnung von Partikeln (P) in einer Probe (S) zur Herstellung dreidimensionaler Strukturen, wobei die Partikel (P) in einer Matrix suspendiert sind und frei in der Matrix (M) migrieren können, wobei die dreidimensionalen Strukturen aus der Kombination mehrerer Muster resultieren, und wobei die Mustergenerierungsvorrichtung Folgendes umfasst :
- einen Mustergenerator (3), der mindestens einen Vibrationsgenerator (32) oder eine Gruppe von Vibrationsgeneratoren (32) umfasst, die es ermöglichen, Schall- oder anderen Vibrationswellen auf die Probe (S) anzuwenden, um ein Muster zu erzeugen, wobei das Muster eine inhomogene Anordnung der Partikel in der Matrix ist,
- einem oder mehreren Aufnahmevorrichtung (2), die mit dem Mustergenerator (3) verbunden sind und einen Probenbehälter (46) mit der Probe (S) halten können,
- mindestens ein Bildaufzeichnungsgerät (7), das auf die Probe (S) fokussiert ist, um das Muster vor, während oder nach der Schallwellenbelichtung der Probe (S) zu überwachen, wobei das mindestens eine Bildaufzeichnungsgerät (7) mit einem Bildanalysator (8) gekoppelt ist,
- einen Rahmen (9), in dem der Bildrekorder eingestellt werden kann, **dadurch gekennzeichnet, dass** der Rahmen auf mehreren Füßen (11) angeordnet ist, wobei mindestens einer der Füße einstellbar ist, wobei der Rahmen (9) einstellbar ist, um die Aufnahmevorrichtung in einer horizontalen Position zu halten,
und dadurch, dass die Mustergenerierungsvorrichtung (1) weiters Folgendes umfasst:
- mindestens eine Umwandlungsvorrichtung (D), die mindestens ein lichtemittierendes System (6) umfasst, das für die Umwandlung der Matrix (M) in eine modifizierte Matrix (M') geeignet ist, in der die Partikel (P) nicht mehr frei migrieren können, wobei die Partikel (P) nicht miteinander verbunden und gemäß dem Muster angeordnet sind,
- eine Steuereinheit (81), die ausgerichtet ist, den Mustergenerator (3), die mindestens eine Umwandlungsvorrichtung (D) und das Bildaufzeichnungsgerät (7) gemäß einem Programm oder Benutzeranweisungen zu steuern, um eine dreidimensionale Struktur im Wesentlichen ohne Probenverschiebung zu erzeugen, wobei die Steuereinheit (81) ferner geeignet ist, Bilder von in Vorbereitung befindlichen Mustern von dem Bildanalysator (8) zu empfangen und automatisch zu erkennen, ob das Muster mit einem erwarteten Muster übereinstimmt.

2. Vorrichtung nach Anspruch 1, wobei die mindestens eine Umwandlungsvorrichtung (D) außerdem eine Wärmemanagementvorrichtung (26) umfasst.

3. Vorrichtung nach Anspruch 1 oder 2, wobei die mindestens eine Umwandlungsvorrichtung (D) gleichzeitig oder nacheinander mit dem Mustergenerator (3) verwendet werden kann.

4. Vorrichtung nach einem der Ansprüche 1 bis 3, wobei die Aufnahmevorrichtung (2) mindestens einen Temperatursensor (25a) oder einen Schwingungssensor (25b) umfasst.

5. Vorrichtung nach einem der Ansprüche 1 bis 4, wobei die Mustergenerierungsvorrichtung ein oder mehrere seitliche Dämpfungsmittel (51) umfasst, die so angeordnet sind, dass sie zumindest einen Teil der reflektierten Wellen und Resonanzfrequenzen, die die Mustergenerierung stören, absorbieren.

6. Vorrichtung nach einem der Ansprüche 1 bis 5, wobei die Steuereinheit eine Einheit (83) mit künstlicher Intelligenz umfasst oder mit dieser verbunden ist, wobei die Einheit (83) mit künstlicher Intelligenz geeignet ist, automatisch die Bedingungen zur Erzeugung eines vorbestimmten Musters zu bestimmen und/oder die Muster auf der Grundlage der tatsächlich erzeugten Muster zu modellieren und/oder die Geometrie eines Probenbehälters zu bestimmen.

7. Vorrichtung nach einem der vorhergehenden Ansprüche, wobei die Partikel aus organischen Partikeln oder biologischen Partikeln, die lebendes Material bilden, oder einer Mischung davon ausgewählt sind.

8. Vorrichtung nach Anspruch 1, wobei der mindestens eine Vibrationsgenerator (32) oder der Satz von Vibrationsgeneratoren (32) Wellen von Positionen seitlich der Probe (S) aussendet.

9. Vorrichtung nach einem der vorhergehenden Ansprüche, die weiters mindestens eine Injektionsvorrichtung (200, 200') umfasst, die für die 3D-Bioinjektion von Biomaterial geeignet ist, wobei die mindestens eine Injektionsvorrichtung mit dem Rahmen (9) verbunden ist und die Position und Aktivierung der mindestens einen Injektionsvorrichtung (200, 200') durch die Steuereinheit (81) gesteuert wird.

10. Ein Verfahren zur Herstellung einer dreidimensionalen Struktur von Partikeln in einer Probe (S), die Partikel (P) umfasst, die frei in einer Schicht (L1) einer Matrix (M) migrieren können, mit Hilfe einer Vorrichtung nach einem der Ansprüche 1 bis 10, umfassend
- einen Musterbildungsschritt (Q2) des Anordnens der Partikel (P) in der Schicht (L1) unter Anwendung von Schallwellen auf die Probe (S), um ein vorbestimmtes Muster zu erreichen, wobei das Muster eine nichthomogene Anordnung der Partikel in der Matrix ist, und
- einen Umwandlungsschritt (Q3) des Modifizierens der Matrix (M) in eine modifizierte Matrix (M'), in der die Partikel (P) nicht mehr frei migrieren können, wobei die Partikel (P) nicht miteinander verbunden und gemäß dem Muster angeordnet sind,
wobei der Musterbildungsschritt (Q2) und der Umwandlungsschritt (Q3) mittels der Steuereinheit (81) gemäß einem Programm oder Benutzeranweisungen durchgeführt werden, um eine dreidimensionale Struktur im Wesentlichen ohne Probenverschiebung zu erzeugen.

11. Verfahren nach Anspruch 10, das weiters einen zweiten Musterbildungsschritt (Q2') des Anordnens von zweiten Partikeln (P2) in einer zweiten Schicht (L2) einer zweiten Matrix (M2) unter Anwendung von Schallwellen auf die Probe (S), um ein zweites vorbestimmtes Muster zu erzeugen, und einen zweiten Umwandlungsschritt (Q3') des Modifizierens der zweiten Matrix (M2) in eine modifizierte zweite Matrix (M2') umfasst, in der die zweiten Partikel (P2) nicht mehr frei migrieren können, **dadurch gekennzeichnet, dass** die zweite Schicht (L2) auf der Schicht (L1) liegt.

12. Verfahren nach Anspruch 10 oder 11, das weiters einen oder mehrere Injektionsschritte (Q4) des Injizierens von zusätzlichem Material in oder auf die eine oder die anderen Schichten (L1, L2) umfasst, **dadurch gekennzeichnet, dass** der eine oder die mehreren Injektionsschritte (Q4) mittels einer Injektionsvorrichtung (200) durchgeführt werden, die in die Mustergenerierungsvorrichtung (1) integriert oder mit dieser kombiniert ist.

13. Verfahren nach einem der Ansprüche 10 oder 12, das weiter einen oder mehrere Behälterproduktionsschritte b) umfasst, wobei ein oder mehrere Probenbehälter (46) auf Anforderung mittels einer Injektionsvorrichtung (200') bedruckt werden.

14. Verfahren nach Anspruch 13, wobei der Probenbehälter (46) eine Geometrie aufweist, die entsprechend der Geometrie des Zielmusters vorgegeben ist.

15. Probe (S) mit einer dreidimensionalen Struktur, wobei die Probe (S) unter Schallwellen nach dem Verfahren der Ansprüche 10 bis 14 gedruckt wird.

## Revendications

1. Dispositif de structuration (1) pour la préparation de structures tridimensionnelles d'un échantillon (S) comprenant des particules (P) en suspension dans une matrice et libres de migrer dans ladite matrice (M), lesdites structures tridimensionnelles résultant de la combinaison de plusieurs motifs, le dispositif de structuration comprenant
- un générateur de motifs (3), comprenant au moins un générateur de vibrations (32) ou un ensemble de générateurs de vibrations (32) permettant d'appliquer des ondes sonores ou d'autres ondes vibratoires à l'échantillon (S) de manière à générer un motif, ledit motif étant un agencement non homogène des particules dans la matrice,
- un ou plusieurs supports (2) reliés au générateur de motifs (3) et adaptés pour maintenir un récipient d'échantillon (46) comprenant l'échantillon (S),
- au moins un enregistreur d'images (7) focalisé sur ledit échantillon (S) de manière à surveiller ledit motif avant, pendant ou après l'exposition de l'échantillon (S) aux ondes sonores, ledit au moins un enregistreur d'images (7) étant couplé à un analyseur d'images (8),
- un cadre (9) dans lequel ledit enregistreur d'images peut être réglé,
**caractérisé en ce que** ledit cadre est placé sur plusieurs pieds (11), au moins l'un des pieds étant réglable, le cadre (9) étant réglable de manière à maintenir ledit support dans une position horizontale, et **en ce que** le dispositif de formation de motifs (1) comprend en outre :
- au moins un dispositif de transformation (D), comprenant au moins un système émetteur de lumière (6), adapté pour la transformation de la matrice (M) en une matrice modifiée (M') dans laquelle les particules (P) ne sont plus libres de migrer, tout en restant non liées les unes aux autres et disposées selon ledit motif,
- une unité de commande (81) adaptée pour piloter ledit générateur de motifs (3), ledit au moins un dispositif de transformation (D) et ledit enregistreur d'images (7) selon un programme ou des instructions de l'utilisateur de manière à produire une structure tridimensionnelle sensiblement sans déplacement d'échantillon, ladite unité de commande (81) étant en outre adaptée pour recevoir des images de motifs en cours de préparation provenant dudit analyseur d'images (8) et reconnaître automatiquement si ledit motif est conforme à un motif attendu.

2. Dispositif selon la revendication 1, dans lequel le au moins un dispositif de transformation (D) comprend en outre un dispositif de gestion thermique (26).

3. Dispositif selon les revendications 1 ou 2, dans lequel le au moins un dispositif de transformation (D) peut être utilisé concomitamment ou séquentiellement au générateur de motifs (3).

4. Dispositif selon l'une quelconque des revendications 1 à 3, dans lequel le support (2) comprend au moins un capteur de température (25a) et un capteur de vibration (25b).

5. Dispositif selon l'une quelconque des revendications 1 à 4, dans lequel ledit dispositif de génération de motifs comprend un ou plusieurs moyens d'amortissement latéral (51) agencés pour absorber au moins une partie des ondes réfléchies et des fréquences de résonance interférant avec la génération de motifs.

6. Dispositif selon l'une des revendications 1 à 5, dans lequel ladite unité de commande comprend ou est connectée à une unité d'intelligence artificielle (83) adaptée pour déterminer automatiquement les conditions pour produire un motif prédéterminé et/ou modéliser les motifs sur la base des motifs réellement produits, et/ou déterminer la géométrie d'un récipient d'échantillon.

7. Dispositif selon l'une quelconque des revendications précédentes, lesdites particules étant choisies parmi des particules organiques ou des particules biologiques désignant une matière vivante ou un mélange de celles-ci.

8. Dispositif selon la revendication 1, dans lequel le ou les générateurs de vibrations (32) émettent des ondes à partir de positions latérales par rapport à l'échantillon (S).

9. Dispositif selon l'une quelconque des revendications précédentes, dans lequel il comprend en outre au moins un dispositif d'injection (200, 200') adapté à l'injection biologique en 3D de biomatériau, ledit au moins un dispositif d'injection étant relié audit châssis (9), la position et l'activation dudit au moins un dispositif d'injection (200, 200') étant pilotées par ladite unité de commande (81).

10. Procédé de production d'une structure tridimensionnelle de particules dans un échantillon (S) comprenant des particules (P) libres de migrer dans une couche (L1) d'une matrice (M), au moyen d'un dispositif selon l'une des revendications 1 à 10, comprenant
- une étape de structuration (Q2) consistant à disposer les particules (P) dans ladite couche (L1) sous l'application d'ondes sonores à l'échantillon (S) de manière à obtenir un motif prédéterminé, ledit motif étant une disposition non homogène des particules dans la matrice, et
- une étape de transformation (Q3) consistant à modifier la matrice (M) en une matrice modifiée (M') dans laquelle les particules (P) ne sont plus libres de migrer, tout en restant non liées les unes aux autres et disposées selon ledit motif,
dans lequel l'étape de structuration (Q2) et l'étape de transformation (Q3) sont réalisées au moyen de ladite unité de commande (81) selon un programme ou des instructions utilisateur de manière à produire une structure tridimensionnelle sensiblement sans déplacement de l'échantillon.

11. Procédé selon la revendication 10, comprenant en outre une deuxième étape de formation de motifs (Q2') consistant à disposer des deuxièmes particules (P2) dans une deuxième couche (L2) d'une deuxième matrice (M2) sous l'application d'ondes sonores à l'échantillon (S) afin de créer un deuxième motif prédéterminé, et une deuxième étape de transformation (Q3') consistant à modifier la deuxième matrice (M2) en une deuxième matrice modifiée (M2') dans laquelle les deuxièmes particules (P2) ne sont plus libres de migrer, **caractérisé en ce que** la deuxième couche (L2) se trouve au-dessus de la couche (L1).

12. Procédé selon les revendications 10 ou 11, comprenant en outre une ou plusieurs étapes d'injection (Q4) consistant à injecter un matériau supplémentaire dans ou sur l'une ou l'autre des couches (L1, L2), **caractérisé en ce que** ladite ou lesdites étapes d'injection (Q4) sont réalisées au moyen d'un dispositif d'injection (200) intégré ou combiné au dispositif de structuration (1).

13. Procédé selon l'une quelconque des revendications 10 ou 12, comprenant en outre une ou plusieurs étapes de production de récipients b), dans lesquelles un ou plusieurs récipients d'échantillons (46) sont imprimés à la demande au moyen d'un dispositif d'injection (200').

14. Procédé selon la revendication 13, dans lequel ledit récipient d'échantillon (46) a une géométrie prédéterminée en fonction de la géométrie du motif ciblé.

15. Échantillon (S) ayant une structure tridimensionnelle, dans lequel ledit échantillon (S) est imprimé sous des ondes sonores selon le procédé des revendications 10 à 14.
